# EUROPÄISCHE PATENTSCHRIFT

(11) **EP 0 986 465 B1**
(45) Veröffentlichungstag und Bekanntmachung des Hinweises auf die Patenterteilung: **07.11.2001**
(21) Anmeldenummer: 98934805.7
(22) Anmeldetag: 27.05.1998
(51) Int. Cl.: B41C 1/04, H04N 1/047

(54) **VERFAHREN ZUR GRAVUR VON DRUCKZYLINDERN**
METHOD FOR ENGRAVING PRINTING CYLINDERS
PROCEDE DE GRAVURE DE CYLINDRES D'IMPRESSION

(30) Priorität: 02.06.1997 DE 19723007; 02.08.1997 DE 19733442
(43) Veröffentlichungstag der Anmeldung: 22.03.2000
(73) Patentinhaber: Heidelberger Druckmaschinen Aktiengesellschaft, 69115 Heidelberg (DE)
(72) Erfinder: DÖLVES, Jürgen, Heinrich, Fritz, D-24226 Heikendorf (DE)
(86) Internationale Anmeldenummer: DE9801444
(87) Internationale Veröffentlichungsnummer: WO9855301

(56) Entgegenhaltungen:
- EP-A- 0 762 723
- WO-A-95/08443
- US-A- 5 492 057
- US-A- 5 532 731

## Beschreibung

Die Erfindung bezieht sich auf das Gebiet der elektronischen Reproduktionstechnik und betrifft ein Verfahren zur Gravur von Druckzylindern für den Tiefdruck, bei dem auf einem Druckzylinder mindestens zwei in Achsrichtung nebeneinander liegende Gravierstränge vorgegebener Strangbreiten mit jeweils einem zugeordneten Gravierorgan graviert werden, sowie eine elektronische Graviermaschine zur Durchführung des Verfahrens.

Bei der Gravur von Druckzylindern in einer elektronischen Graviermaschine bewegt sich ein Gravierorgan, das beispielsweise einen Gravierstichel als Schneidwerkzeug aufweist, in axialer Richtung kontinuierlich oder schrittweise an einem rotierenden Druckzylinder entlang. Der von einem Graviersteuersignal gesteuerte Gravierstichel schneidet eine Folge von in einem Gravurraster angeordneten Vertiefungen, im folgenden Näpfchen genannt, in die Mantelfläche des Druckzylinders. Das Graviersteuersignal wird aus der Überlagerung eines die Tonwerte zwischen "Schwarz" und "Weiß" repräsentierenden Graviersignals mit einem periodischen Rastersignal gebildet. Während das periodische Rastersignal eine vibrierende Hubbewegung des Gravierstichels bewirkt, steuert das Graviersignal entsprechend den wiederzugebenden Tonwerten die Tiefen der in die Mantelfläche des Druckzylinders gravierten Näpfchen.

Für den Magazindruck müssen oft auf einem Druckzylinder bzw. auf den Druckzylindern eines Farbsatzes, die nacheinander in einer Graviermaschine oder aber gleichzeitig in mehreren Graviermaschinen graviert werden, eine Vielzahl axial nebeneinander liegender, streifenförmige Zylinderbereiche, Gravierstränge genannt, mit jeweils einem Gravierorgan gleichzeitig graviert werden. In den einzelnen Graviersträngen werden beispielsweise die verschiedenen Druckseiten eines Druckauftrages graviert. Die den einzelnen Graviersträngen zugeordneten Gravierorgane sind auf einem gemeinsamen Gravierwagen montiert, der sich bei der Gravur in Achsrichtung an dem Druckzylinder entlang bewegt.

Voraussetzung für eine gute Reproduktionsqualität ist das passergenaue Einhalten der Strangbreiten der einzelnen Gravierstränge in Achsrichtung des Druckzylinders. Um eine passergenaue Gravur der Gravierstränge zu erreichen, müssen nach dem herkömmlichen Verfahren die Abstände zwischen den Gravierstichelspitzen der einzelnen Gravierorgane in Achsrichtung des Druckzylinders durch axiales Verschieben der Gravierorgane auf dem Gravierwagen mit hoher Genauigkeit auf die geforderten Strangbreiten eingestellt und dann der Gravierwagen mit den genau beabständeten Gravierorganen relativ zum Druckzylinder derart verschoben werden, daß die Gravierstichelspitzen auf den jeweiligen axialen Gravur-Startposition der Gravierstränge positioniert sind. Dabei kommt es nicht so sehr auf die absolute Einstellung der Strangbreiten in einem zulässigen Toleranzbereich an, sondern darauf, daß alle Strangbreiten auf einem Druckzylinder innerhalb des Toleranzbereiches genau übereinstimmen.

Das herkömmliche Ausrichten der Gravierstichelspitzen der Gravierorgane auf die zu gravierenden Strangbreiten erfolgt im wesentlichen manuell durch einen Bediener, indem dieser die den Strangbreiten entsprechenden Abstände der Gravierorgane zunächst grob einstellt und dann die Gravierstichelspitzen der Gravierorgane unter visueller Beobachtung der Gravierstichelspitzen mit Hilfe einer speziellen Mikroskopeinrichtung (Stichelzuordnungslehre) und von Hand betätigbarer Spindelantriebe fein positioniert.

Diese manuelle Vorgehensweise ist zeitraubend, insbesondere dann, wenn eine große Anzahl von Graviersträngen zu gravieren und somit eine große Anzahl von Gravierorganen zu positionieren ist. Außerdem hängt die Justiergenauigkeit im wesentlichen von der Sorgfalt des Bedieners ab.

Aus der WO-OS 95/31332 ist bereits eine Einrichtung zum automatischen axialen Positionieren einer Vielzahl von Gravierorganen bei der Gravur von Druckzylindern mit Hilfe von motorischen Antrieben für die einzelnen, auf einem Gravierwagen angeordneten Gravierorgane und einer Sensorüberwachung für die automatischen Bewegungsabläufe bekannt.

Aufgabe der vorliegenden Erfindung ist es, ein Verfahren zur Gravur von Druckzylindern für den Tiefdruck, bei dem auf einem Druckzylinder mindestens zwei in Achsrichtung nebeneinander liegende Gravierstränge vorgegebener Strangbreiten mit jeweils einem zugeordneten Gravierorgan graviert werden, eine elektronische Graviermaschine zur Durchführung des Verfahrens sowie eine Positionsmeßeinrichtung für eine Graviermaschine derart zu verbessern, daß genaue manuelle oder automatische Einstellungen der axialen Abstände der Gravierorgane zueinander nicht mehr erforderlich sind, um eine gute Gravierqualität zu erreichen.

Diese Aufgabe wird bezüglich des Verfahrens durch die Merkmale des Anspruchs 1, bezüglich der Graviermaschine durch die Merkmale des Anspruchs 26 und bezüglich der Positionsmeßeinrichtung durch die Merkmale des Anspruchs 31 gelöst.

Vorteilhafte Weiterbildungen und Ausgestaltungen sind in den Unteransprüchen angegeben.

Die Erfindung wird nachfolgend anhand der Fig. 1 bis 4 näher erläutert.

Es zeigen:
- Fig. 1: ein prinzipielles Blockschaltbild einer Graviermaschine für Druckzylinder,
- Fig. 2: eine graphische Darstellung zur Erläuterung der Interpolation,
- Fig. 3: eine Darstellung zur Erläuterung der durch eine Grobpositionierung der Gravierorgane entstandenen Abstandsfehler und deren elektronische Kompensation bei der Gravur der Gravierstränge und
- Fig. 4: eine weitere Darstellung zur Erläuterung der durch eine Grobpositionierung der Gravierorgane entstandenen Abstandsfehler und deren elektronische Kompensation bei der Gravur der Gravierstränge.

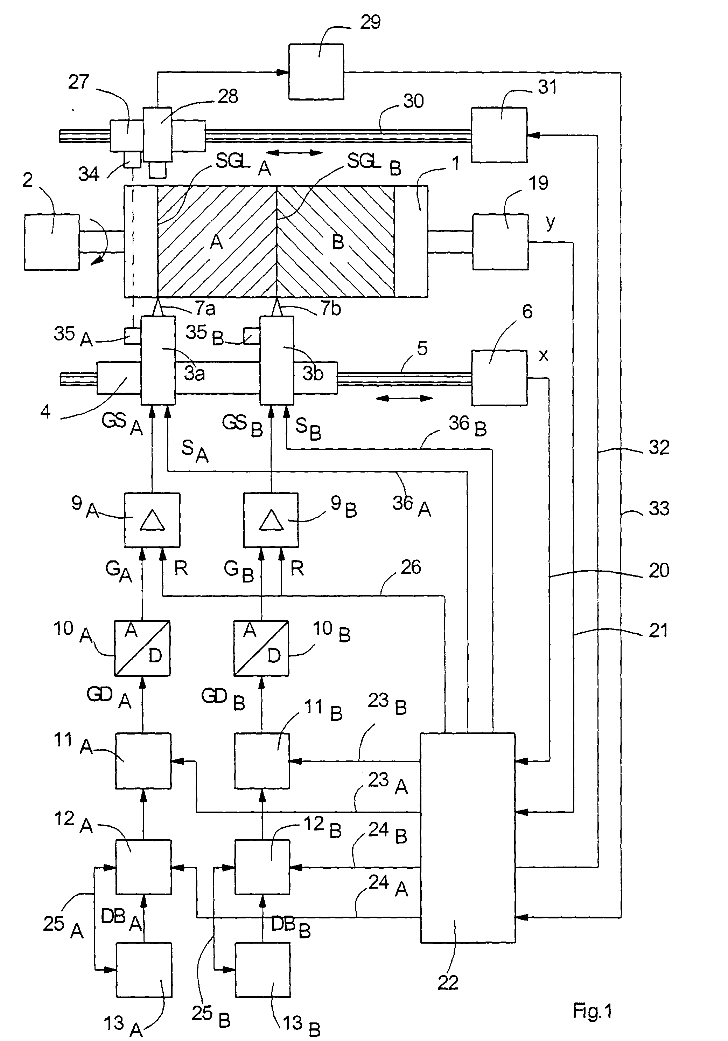

Fig. 1 zeigt ein prinzipielles Blockschaltbild einer Graviermaschine mit einem Druckzylinder (1), der von einem Zylinderantrieb (2) rotatorisch angetrieben wird. Die Graviermaschine ist beispielsweise ein HelioKlischograph® der Firma Hell Gravure Systems GmbH, Kiel, DE.

Auf dem Druckzylinder (1) sollen mehrere in Achsrichtung des Druckzylinders (1) nebeneinander liegende Gravierstränge, im Ausführungsbeispiel zwei Gravierstränge (A, B) mit übereinstimmenden axialen Strangbreiten (SB), mit jeweils einem zugeordneten Gravierorgan (3) graviert werden. Start-Gravierlinien (SGL) definieren jeweils den axialen Gravierbeginn der Gravierstränge (A, B) auf dem Druckzylinder (1).
Die Gravierorgane (3), die beispielsweise als elektromagnetische Gravierorgane mit Graviersticheln als Schneidwerkzeuge ausgebildet sind, befinden sich auf einem Gravierwagen (4), auf dem sie durch manuell oder motorisch betätigbare Spindelantriebe in Achsrichtung des Druckzylinders (1) einzeln verschiebbar und arretierbar sind. Zur axialen Positionierung des Gravierwagens (4) relativ zum Druckzylinder (1) und zum Vorschub des Gravierwagens (4) in Achsrichtung während der Gravur wird dieser über eine Spindel (5) von einen Gravierwagenantrieb (6) in Achsrichtung des Druckzylinders (1) bewegt.

Der Gravierwagenantrieb (6) ist beispielsweise als Präzisionsantrieb mit einem Schrittmotor ausgebildet. Der Schrittmotor wird durch eine Motortaktfolge angesteuert, deren Takte jeweils einem zurückgelegten Weginkrement des Gravierwagens (4) entsprechen. Somit kann durch Zählen der Takte der Motortaktfolge die jeweilige axiale Position des Gravierwagens (4) festgestellt bzw. der Gravierwagen (4) durch Rückwärtszählen einer vorgegebenen Anzahl von Takten auf eine definierte axiale Position verschoben werden. Derartige Positionierungsantriebe sind bekannt und im Handel erhältlich.

Die Gravierstichel (7) der Gravierorgane (3) schneiden Gravierlinie für Gravierlinie eine Folge von Näpfchen in die Mantelfläche des rotierenden Druckzylinders (1), während sich der Gravierwagen (4) mit den Gravierorganen (3) in Vorschubrichtung an dem Druckzylinder (1) entlang bewegt. Die Näpfchen sind in einem Gravurraster angeordnet, in dem die Schnittpunkte der Rasternetzlinien die Gravierorte der für die Näpfchen definieren.

Die Gravur der Näpfchen erfolgt bei dem dargestellten Ausführungsbeispiel auf einzelnen, kreisförmig in Umfangsrichtung um den Druckzylinder (1) verlaufenden Gravierlinien, wobei der Gravierwagen (4) jeweils nach der Gravur der Näpfchen auf einer Gravierlinie einen axialen Vorschubschritt zur nächsten Gravierlinie ausführt.

Ein derartiges Gravierverfahren ist beispielsweise in der US-PS 4,013,829 beschrieben. Alternativ kann die Gravur der Gravierstränge (A, B) auch in einer helixförmig um den Druckzylinder (1) verlaufenden Gravierlinie erfolgen, wobei der Gravierwagen (4) dann während der Gravur eine kontinuierliche Vorschubbewegung ausführt.

Die Gravierstichel (7) der Gravierorgane (3) werden durch Graviersteuersignale (GS) gesteuert. Die Graviersteuersignale (GS) werden in Gravierverstärkern (9) aus der Überlagerung eines periodischen Rastersignals (R) mit Graviersignalen (G) gebildet, welche die Tonwerte der zu gravierenden Näpfchen zwischen "Schwarz" und "Weiß" repräsentieren. Während das periodische Rastersignal (R) eine vibrierende Hubbewegung der Gravierstichel (7) zur Erzeugung des Gravurrasters bewirkt, bestimmen die Graviersignalwerte (G) entsprechend den zu gravierenden Tonwerten die jeweilige Eindringtiefe der Gravierstichel (7) in die Mantelfläche des Druckzylinders (1). Die Gravierorgane (3) weisen außerdem jeweils einen Schaber, der das sich beim Gravieren bildende Material entfernt, und einen Gleitfuß auf, welcher sich auf der Mantelfläche des Druckzylinders (1) abstützt und für einen konstanten Abstand zwischen dem Gravierstichel in seiner Ruhelage und der Mantelfläche des Druckzylinders (1) sorgt. Schaber und Gleitfuß können, vorzugsweise in den Gravierpausen, mittels einer steuerbaren Abhebevorrichtung von der Mantelfläche des Druckzylinders (1) abgehoben werden, um Beschädigungen der Mantelfläche zu vermeiden.

Die Frequenz des Rastersignals (R) zusammen mit der Umfangsgeschwindigkeit des Druckzylinders (1) und der axialen Vorschubschrittweite des Gravierwagens (4) legen die Geometrie des Gravurrasters bezüglich Rasterwinkel und Rasterweite fest.

Die analogen Graviersignalwerte (G) werden in A/D-Wandlern (10) aus Gravurdaten (GD) gewonnen, die in Gravurdatenspeichern (11) zwischengespeichert sind und aus diesen Gravierlinie für Gravierlinie ausgelesen und den A/D-Wandlern (10) zugeführt werden. Dabei ist jedem Gravierort für ein Näpfchen auf dem Druckzylinder (1) ein Gravurdatum von mindestens einem Byte zugeordnet, welches unter anderem als Gravierinformation den zu gravierenden Tonwert zwischen "Schwarz" und "Weiß" enthält.

Die zur Gravur der Druckseiten in dem jeweiligen Gravurraster benötigten Gravurdaten (GD) werden im Ausführungsbeispiel on-line während der Gravur durch eine Rasterumrechnung mittels Interpolation in Rasterrechnern (12) aus Bild- und Textinformation enthaltenen Bilddaten (BD) gewonnen, die in einer vom jeweiligen Gravurraster unabhängigen Originalauflösung vorliegen. Die zur Interpolation der Gravurdaten (GD) benötigten Bilddaten (BD) sind in Form von adressierbaren Bilddatendateien in Bilddatenspeichern (13) abgelegt.

Die Erzeugung der Gravurdaten (GD) für die einzelnen Gravierorte des Gravurrasters aus den in der Originalauflösung vorliegenden Bilddaten (BD) durch eine Interpolationsrechnung erfolgt in vorteilhafter Weise nach der DE-PS 43 35 214.

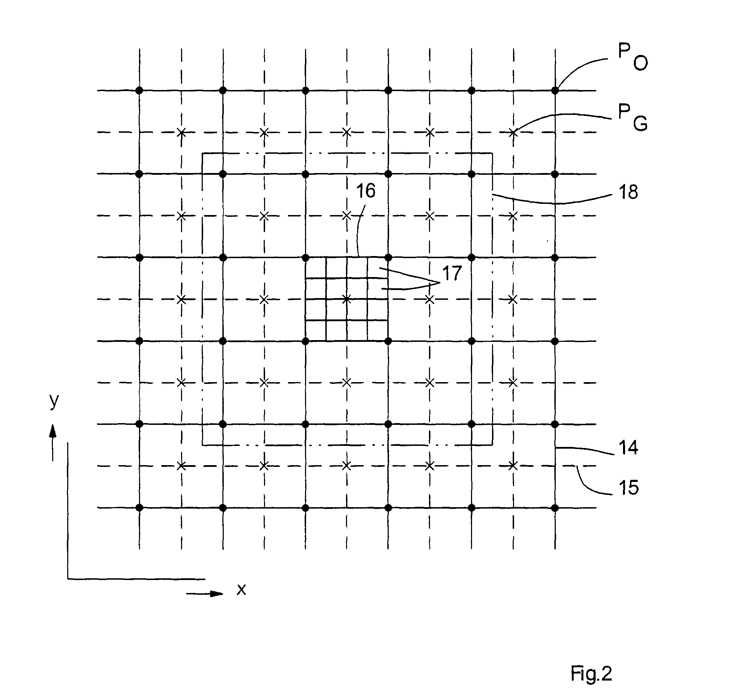

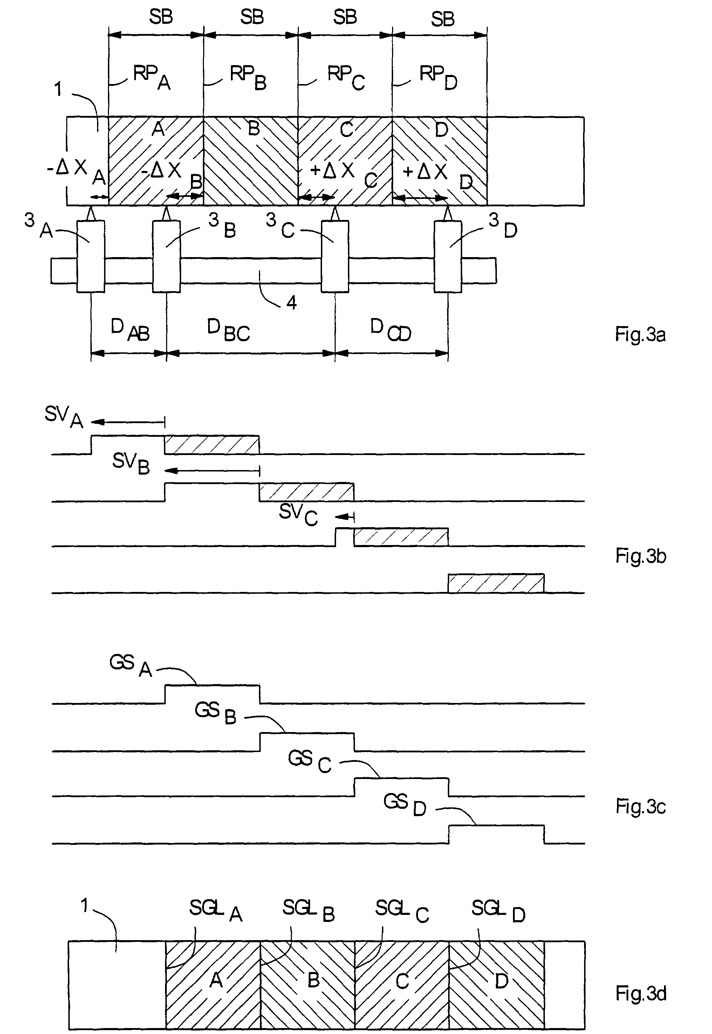

Fig. 2 zeigt einen Ausschnitt aus einem die Originalauflösung repräsentierenden Originalraster (14) mit Bildpunkten (P_{O}) in den Schnittpunkten der Rasternetzlinien des Originalrasters (14) und einen entsprechenden Ausschnitt aus einem Gravurraster (15) mit Gravierorten (P_{G}) in den Schnittpunkten der Rasternetzlinien des Gravurrasters (15). Die Raster (14, 15) sind in Umfangsrichtung (Y-Richtung) des Druckzylinders (1) und in Vorschubrichtung (X-Richtung) des Gravierwagens (4) orientiert. Die in Y-Richtung verlaufenden Rasternetzlinien des Gravurrasters bilden die parallel zueinander verlaufenden Gravierlinien, deren Abstände voneinander jeweils einem Vorschubschritt des Gravierwagens (4) entsprechen.

In dem Originalraster (14) ist ein Klassenfeld (16) festgelegt. Das Klassenfeld (16) ist in Teilfelder (17) unterteilt, die Interpolationsklassen darstellen. Das Klassenfeld (16) hat die Größe einer Rastermasche des Originalrasters (14). Um das Klassenfeld (16) ist ein Interpolationsfenster (18) festgelegt, das jeweils so viele Bildpunkte (P_{O}) des Originalrasters (14) umfaßt, wie Bilddaten (BD) an der Interpolation des Gravurdatums (GD) eines Gravierortes (P_{G}) beteiligt werden sollen. Für jede Interpolationsklasse des Klassenfeldes (16) wird eine Anzahl von Gewichtungskoeffizienten ermittelt, die der Anzahl von Bildpunkten (P_{O}) innerhalb des Interpolationsfensters (18) entspricht. Dazu wird der jeweilige Abstand der Teilfläche (17), welche die betreffende Interpolationsklasse darstellt, zu den einzelnen Bildpunkten (P_{O}) innerhalb des interpolationsfensters (18) festgestellt und für jeden (P_{O}) innerhalb des Interpolationsfensters (18) ein dem Abstand entsprechender Gewichtungskoeffizient aus einer zweidimensionalen Gewichtungsfunktion berechnet wird. Die berechneten Sätze von Gewichtungskoeffizienten für die einzelnen Interpolationsklassen sind den entsprechenden Teilfeldern (17) zugeordnet und abrufbar gespeichert.

Bei der on-line Interpolation der Gravurdaten (GD) wird das Interpolationsfenster (18) mit dem Klassenfeld (16) über das Originalraster (14) verschoben, bis jeweils ein Gravurort (P_{G}) innerhalb des verschobenen Klassenfeldes (16) liegt. Die Verschiebung des Interpolationsfensters (18) wird durch die Ortskoordinaten (x, y) eines dem Druckzylinder (1) zugeordneten XY-Koordinatensystems gesteuert, dessen Y-Achse in Umfangsrichtung (Gravierrichtung) und dessen X-Achse in Achsrichtung (Vorschubrichtung) des Druckzylinders (1) orientiert sind.
Wenn ein Gravurort (P_{G}) innerhalb des verschobenen Klassenfeldes (16) liegt, wird dasjenige Teilfeld (17) festgestellt, in das der betreffende Gravierort (P_{G}) fällt, sowie der Satz von Gewichtungskoeffizienten derjenigen Interpolationsklasse aufgerufen, die dem festgestellten Teilfeld (17) zugeordnet ist. Abschließend wird dann das Gravurdatum (GD) für den aktuellen Gravierort (P_{G}) mittels des aufgerufenen Satzes von Gewichtungskoeffizienten berechnet, indem jeweils die Bilddaten (BD) der innerhalb des Interpolationsfensters (18) liegenden Bildpunkte (P_{O}) mit den aufgerufenen Gewichtungskoeffizienten gewichtet und die gewichteten Bilddaten (BD) addiert werden, um das interpolierte Gravurdatum (GD) eines Gravurortes (P_{G}) zu erhalten.

Nachfolgend wird die Beschreibung der Fig. 1 fortgesetzt.

Jeder Gravurdatenspeicher (11) ist als Wechselspeicher mit zwei Speicherbereichen organisiert. Während aus dem einen Speicherbereich die Gravurdaten (GD) einer aktuell zu gravierenden Gravierlinie ausgelesen werden, werden in den anderen Speicherbereich die in den Rasterrechnern (12) interpolierten Gravurdaten (GD) der nachfolgend zu gravierenden Gravierlinie eingeschrieben.

Die zur Interpolation benötigten Bilddaten (BD) der zu gravierenden Druckseiten werden beispielsweise durch punkt- und zeilenweise, optoelektronische Abtastung von Einzelvorlagen in einem Scanner und durch anschließende elektronische Montage der Einzelvorlagen zu den Druckseiten gewonnen.

Jeder Gravierort (P_{G}) in dem Gravurraster ist durch die Ortskoordinaten (x, y) des XY-Koordinatensystems definiert. Der Gravierwagenantrieb (6) erzeugt die x-Ortskoordinaten in Vorschubrichtung, welche die axialen Positionen des Gravierwagens (4) in bezug auf den Druckzylinder (1) definieren. Ein mit dem Druckzylinder (1) mechanisch gekoppelter Positionsgeber (19) erzeugt die entsprechende y-Orts-koordinaten, welche die relativen Umfangspositionen des rotierenden Druckzylinders (1) gegenüber den Graviersticheln (7) definieren. Die Ortskoordinaten (x, y) der Gravierorte (P_{G}) werden über Leitungen (20, 21) einem Steuerwerk (22) zugeführt.

Das Steuerwerk (22) steuert die Gravurdatenspeicher (11), die Rasterrechner (12) und die Bilddatenspeicher (13) bei der Interpolation der Gravurdaten (GD) aus den Bilddaten (BD) sowie die gesamten Abläufe bei der Gravur.
Aus den Ortskoordinaten (x, y) werden in dem Steuerwerk (22) mit Hilfe der axialen x-Ortskoordinaten der Start-Gravierlinien (SGL) in den zwei Graviersträngen (A, B) die jeweiligen x-Ortskoordinaten der Gravierorte (P_{G}) auf den aktuell zu gravierenden Gravierlinien zur Adressierung der zugehörigen Gravurdaten (GD) berechnet. Das Steuerwerk (22) erzeugt außerdem eine Schreibtaktfolge und eine Lesetaktfolge, mit denen die Gravurdaten (GD) in die Gravurdatenspeicher (11) eingeschrieben und aus diesen ausgelesen werden. Adressen, Lesetaktfolge, Schreibtaktfolge und entsprechende Steuerbefehle werden den Gravurdatenspeichern (11) über Leitungen (23) zugeführt.

Die Ortskoordinaten (x, y) der Gravierorte (P_{G}) auf den aktuell zu gravierenden Gravierlinien in den zwei Graviersträngen (A, B) und entsprechende Steuersignale werden außerdem über Leitungen (24) an die Rasterrechner (12) gegeben. Aus den Ortskoordinaten (x, y) werden in den Rasterrechnern (12) die Gravierorte auf den nachfolgend zu gravierenden Gravierlinien ermittelt und dann die Gravurdaten (GD) für die Gravierorte auf den nachfolgend zu gravierenden Gravierlinien aus den entsprechenden Bilddaten (BD) interpoliert.

Die zur Interpolation benötigten Bilddaten (BD) werden in den Bilddatenspeichern (13) von den Rasterrechnern (12) aus adressiert, mittels Lesetaktfolgen aus den Bildlinienspeichern (13) ausgelesen und den Rasterrechnern (12) zugeführt. Rasterrechner (12) und Bilddatenspeicher (13) stehen über Leitungen (25) in Wirkverbindung.

Das Steuerwerk (22) erzeugt außerdem das Rastersignal (R), das den Gravierverstärkern (9) über eine Leitung (26) zugeführt wird.

Vor Gravurbeginn müssen die Abstände der Gravierstichelspitzen der Gravierorgane (3) auf dem Gravierwagen (4) auf die Strangbreite (SB) der Gravierstränge eingestellt und gegebenenfalls anschließend durch Verschieben des Gravierwagens (4) die Gravierstichelspitzen der Gravierorgane (3) auf den axialen Start-Gravier-linien (SGL) der Gravierstränge positioniert werden.

Zur axialen Abstandseinstellung zwischen den Gravierstichelspitzen der Gravierorgane (3) weist die Graviermaschine erfindungsgemäß eine Positionsmeßeinrichtung (27, 28, 29) auf, die im Ausführungsbeispiel im wesentlichen aus einem in Achsrichtung des Druckzylinders (1) verschiebbaren Meßwagen (27) mit einer Videokamera (28) und aus einer Bildauswertestufe (29) zur Auswertung des von der Videokamera (28) erzeugten Videobildes besteht. Der Meßwagen (27) wird mittels einer Spindel (30) von einem Meßwagenantrieb (31) bewegt, der ebenfalls als Präzisionsantrieb mit einem Schrittmotor ausgebildet ist.

Zur Vorbereitung der Abstandseinstellung der Gravierstichelspitzen der Gravierorgane (3) auf dem Gravierwagen (4) werden axiale Referenzpositionen (RP) definiert, deren Abstand zueinander jeweils der geforderten Strangbreite (SB) entspricht. Die axiale Lage der Referenzpositionen (RP) in bezug auf den Druckzylinder (1) ist prinzipiell beliebig. Es erweist sich aber als zweckmäßig, wenn die um die Strangbreite (SB) voneinander beabstandeten Referenzpositionen (RP) mit den axialen Positionen der ebenfalls um die Strangbreite (SB) voneinander beabstandeten zwei Start-Gravierlinien (SGL) auf dem Druckzylinder (1) zusammenfallen, da sich in diesem Fall nach der Abstandseinstellung der Gravier- stichelspitzen eine Positionierung des Gravierwagens (4) auf die entsprechenden Start-Gravierlinien (SGL) erübrigt.

Durch Vorgabe der x-Ortskoordinaten (X_{REF}) der Referenzpositionen (RP) wird eine Meßmarke der Videokamera (28) mittels des Meßwagenantriebs (31) genau auf eine der Referenzpositionen (RP) positioniert. Die vorgegebenen x-Ortskoordinaten (x_{REF}) und entsprechende Steuerbefehle werden von dem Steuerwerk (22) über eine Leitung (32) an den Meßwagenantrieb (31) übermittelt.

Mit der Positionsmeßeinrichtung (27, 28, 29) werden durch Auswertung der mit der Videokamera (28) aufgenommenen Videobilder der Gravierstichelspitzen der Gravierorgane (3) - oder jeweils eines anderen Bezugspunktes in einer senkrecht zur Achsrichtung orientierten und durch eine Stichelspitze verlaufenden Ebene - nacheinander die axialen Istpositionen der Gravierstichelspitzen der Gravierorgane (3) festgestellt, die zuvor von einem Bediener manuell oder motorisch nur grob auf die Referenzpositionen (RP) eingestellt wurden.

Anschließend werden dann in der Bildauswertestufe (29) die Abstandsfehler ± Δx durch Differenzbildung zwischen den x-Ortskoordinaten der Istpositionen der Gravierstichelspitzen und den x-Ortskoordinaten der zugehörigen Referenz-Positionen (RP) ausgemessen. Die Abstandsfehler ± Δx können ein Vielfaches des Gravierlinienabstandes plus/minus einem Restfehler betragen. Die gemessenen Abstandsfehler ± Δx gelangen über eine Leitung (33) zur Weiterverarbeitung an das Steuerwerk (22).

Zur manuell oder motorisch durchgeführten groben axialen Verschiebung der Gravierorgane (3) in den Bereich der Referenzpositionen (RP) weist die Graviermaschine eine Hilfseinrichtung, beispielsweise in Form einer senkrecht zur Achsrichtung ausgerichteten Lichtschranke (34, 35), auf. Dazu ist an dem Meßwagen (27) ein Lichtstrahlerzeuger (34) und an den Gravierorganen (3) jeweils ein Lichtsensor (35) angebracht, der bei manueller Verschiebung der Gravierorgane (3) durch den Bediener ein optisches oder akustisches Signal und bei motorischer Verschiebung der Gravierorgane (3) ein elektrisches Steuersignal erzeugt, wenn sich die Gravierstichelspitze eines Gravierorgans (3) innerhalb des zulässigen Meßbereichs der Positionsmeßeinrichtung (27, 28, 29) befindet.

Die Ermittlung der Istpositionen der Gravierstichelspitzen erfolgt in zweckmäßiger Weise bevor der Druckzylinder (1) in die Graviermaschine eingebracht wird. Die Videokamera (28) wird dabei jeweils auf einem Support des Meßwagens (27) senkrecht zur Achsrichtung derart verschoben, daß diese ein scharfes Videobild der Gravierstichelspitze liefert.

Wie bereits erwähnt, können anstelle der Istpositionen der Gravierstichelspitzen der Gravierorgane (3) auch die Istpositionen anderer Bezugspunkte ermittelt werden, beispielsweise die axialen Istpositionenen von mit den einzelnen Gravierorganen (3) auf dem Druckzylinder (1) probeweise gravierten Näpfchen. In diesem Fall nimmt die Videokamera (28) Videobilder der probeweise gravierten Näpfchen auf, die in der Bildauswertestufe (29) zur Ermittlung der Istpositionen und die axialen Abstandsfehler ± Δx der Näpfchen von den Referenzpositionen (RP) entsprechend ausgewertet wird.

Die nicht näher dargestellten Abhebevorrichtungen für Gleitfuß und Schaber in den Abtastorganen (3) werden durch Gravurfreigabesignale (S) auf Leitungen (36) betätigt.

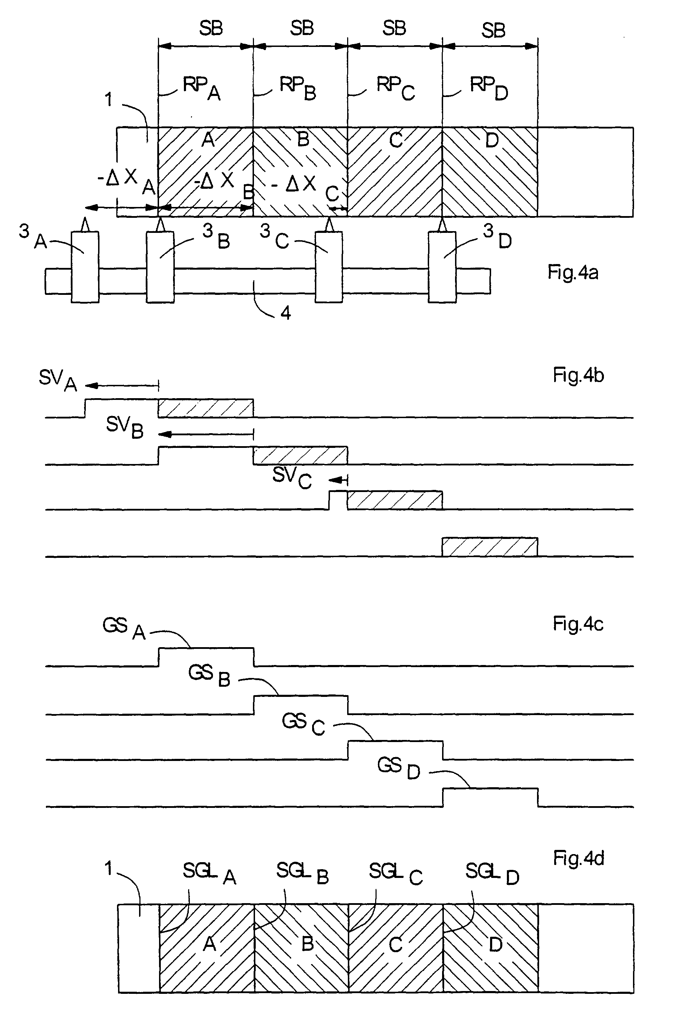

Das erfindungsgemäße Verfahren zur Gravur von Graviersträngen auf einem Druckzylinder wird nachfolgend anhand der Verfahrensschritte [I] bis [IV] und den Darstellungen in Fig. 3 und Fig. 4 näher erläutert.

Die beispielhaft für die Gravur von vier Graviersträngen mit vier zugeordneten Gravierorganen (3) beschriebenen Verfahrensschritte gelten selbstverständlich auch für die Gravur einer beliebigen Anzahl von Gravursträngen mit gleichen oder unterschiedlichen Strangbreiten (SB).
In einem ersten Verfahrensschritt [I] werden die an der Gravur der Gravierstränge beteiligten Gravierorgane (3) grob auf die Referenzpositionen (RP), deren Abstände voneinander den vorgegebenen Strangbreiten (SB) der Gravierstränge entsprechen, verschoben und dort fixiert. Danach werden die durch die grobe Positionierung der Gravierorgane (3) verursachten axialen Abstandsfehler ± Δx der Gravierstichelspitzen oder der probeweise gravierten Näpfchen gegenüber den Referenzpositionen (RP) durch Differenzbildung zwischen den x-Ortskoordinaten der Istpositionen der Gravierstichelspitzen oder der Näpfchen und den x-Ortskoordinaten der zugehörigen Referenzpositionen (RP) ausgemessen. Bei der Ausmessung der Abstandsfehler ± Δx wird zwischen positiven Abstandsfehlern und negativen Abstandsfehlern unterschieden, wobei sich positive Abstandsfehler +Δx ergeben, wenn die Istpositionen in Vorschubrichtung gesehen rechts von den zugehörigen Referenzpositionen liegen und negative Abstandsfehler -Δx, wenn die Istpositionen links von den zugehörigen Referenzpositionen liegen.

Fig. 3a zeigt in einer prinzipiellen Darstellung die Gravur von z.B. vier Graviersträngen (A, B, C, D). In diesem Fall wird der Meßwagen (27) zum Ausmessen der positiven oder negativen axialen Abstandsfehler ± Δx der Gravierstichelspitzen der Gravierorgane (3) gegenüber den Referenzpositionen (RP) zunächst auf der ersten Referenzposition (RP_{A}) gefahren. Das dem ersten Gravierstrang (A) zugeordnete erste Gravierorgan (3_{A}) wird dann grob verschoben, bis die Lichtschranke (34, 35) des Meßwagens (27) signalisiert, daß sich die Gravierstichelspitze des ersten Gravierorgans (3_{A}) im Meßbereich der Videokamera (28) befindet. Dann wird in der Bildauswertestufe (29) der axiale Abstandsfehler ± Δx_{A} zwischen der Gravierstichelspitze des ersten Gravierorgans (3_{A}) und der ersten Referenzposition (RP_{A}) festgestellt. Der Übersichtlichkeit wegen sind die Abstandsfehler übertrieben groß gegenüber den Strangbreiten dargestellt.

Anschließend wird der Meßwagen (27) um die Strangbreite (SB) auf die zweite Referenzposition (RP_{B}) verschoben und das dem zweiten Gravierstrang (B) zugeordnete zweite Gravierorgan (3_{B}) grob auf die zweite Referenzposition (RP_{B}) eingestellt, bis die Lichtschranke (34, 35) des Meßwagens (27) wiederum signalisiert, daß sich die Gravierstichelspitze des zweiten Gravierorgans (3_{B}) im Meßbereich der Videokamera (28) befindet. Dann wird in der Bildauswertestufe (29) der Abstandsfehler ± Δx_{B} zwischen der Gravierstichelspitze des zweiten Gravierorgans (3_{B}) und der zweiten Referenzposition (RP_{B}) ausgemessen. In der gleichen Weise wird mit den anderen beiden Gravierorganen (3_{C}, 3_{D}) verfahren,um die Abstandsfehler ± Δx_{C} und ± Δx_{D} zu ermitteln.
Zum Ausmessen der positiven oder negativen axialen Abstandsfehler ± Δx zwischen den mit den Gravierorganen (3_{A}, 3_{B}, 3_{C}, 3_{D}) probeweise gravierten Näpfchen und den Referenzpositionen (RP_{A}, RP_{B}, RP_{C}, RP_{D}) werden in zweckmäßiger Weise zunächst alle Gravierorgane (3_{A}, 3_{B},3_{C}, 3_{D}) grob auf den Referenzpositionen (RP_{A}, RP_{B}, RP_{C}, RP_{D}) positioniert und dann mit jedem Gravierorgan (3_{A}, 3_{B},3_{C}, 3_{D}) mindetsens ein Näpfchen auf dem Druckzylinder (1) graviert. Nach der probeweisen Gravur der Näpfchen wird dann der Meßwagen (27) mit der Videokamera (28) nacheinander auf den Referenzpositionen (RP_{A}, RP_{B}, RP_{C}, RP_{D}) positioniert und die Abstandsfehler ± Δx_{A}, ± Δx_{B}, ± Δx_{C} und ± Δx_{D} der gravierten Näpfchen von den Referenzpositionen (RP_{A}, RP_{B}, RP_{C}, RP_{D}) ausgemessen.

In der Fig. 3a sind die grob positionierten Gravierstichelspitzen der vier Gravierorgane (3_{A}, 3_{B}, 3_{C}, 3_{D}) auf den vier Referenzpositionen (RP_{A}, RP_{B}, RP_{C}, RP_{D}) dargestellt, die jeweils um die vorgegebe Strangbreite (SB) voneinander beabstandet sind.

In dem in Fig. 3a dargestellten Beispiel ergeben sich für die Gravierstichelspitzen des ersten und zweiten Gravierorgans (3_{A},3_{B}) negative Abstandsfehler -Δx_{A} und - Δx_{B} zu der ersten bzw. zweiten Referenzposition (RP_{A,} RP_{B}), da die IST-Positionen der Graviersticheispitzen, in Vorschubrichtung gesehen, links der ersten bzw. zweiten Referenzposition (RP_{A}, RP_{B}) liegen. Für die Gravierstichelspitzen des dritten und vierten Gravierorgans (3_{C}, 3_{D}) ergeben sich dagegen positive Abstandsfehler +Δx_{C} und +Δx_{D} zu der dritten bzw. vierten Referenzposition (RP_{C}, RP_{D}), da die Istpositionen der Gravierstichelspitzen rechts der dritten bzw. vierten Referenzposition (RP_{C,} RP_{D}) liegen.

Der fehlerhafte Istabstand zwischen den Gravierstichelspitzen des ersten und zweiten Gravierorgans (3_{A}, 3_{B}) ist somit D_{AB} = SB + △x_{A} - △x_{B}, der fehlerhafte Istabstand zwischen den Gravierstichelspitzen des zweiten und dritten Gravierorgans (3_{B}, 3_{D}) ist D_{BC} = SB + △x_{B} + △x_{C} und der fehlerhafte Istabstand zwischen den Gravierstichelspitzen des dritten und vierten Gravierorgans (3_{C}, 3_{D}) ist D_{CD} = SB - Δx_{C} + Δx_{D}.

In einem Verfahrensschritt [II] wird zunächst festgestellt, ob im Verfahrensschritt [I] positive Abstandsfehler + Δx gemessen wurden. Ist das nicht der Fall, wird mit dem Verfahrenschritt [IV] fortgefahren. Wurden dagegen positive Abstandsfehler + Δx gemessen, wird zunächst der maximale positive Abstandsfehler + Δx_{MAX} ermittelt.
In Fig. 3a hat beispielsweise die Gravierstichelspitze des vierten Gravierorgans (3_{D}) den maximalen positiven Abstandsfehler + Δx_{D} = ΔX_{MAX}.

In einem Verfahrensschritt [III] werden die gemessenen Abstandsfehler ± Δx rechnerisch (Fig. 3) oder mechanisch (Fig. 4) korrigiert, um sicherzustellen, daß keine Gravierinformation bei der Gravur der Gravierstränge verlorengeht.

Bei der rechnerischen Korrektur der Abstandsfehler gemäß Fig. 3 wird durch Differenzbildung zwischen den Abstandsfehlern ± Δx und einem Korrekturwert der maximale positive Abstandsfehler + Δx_{MAX} mindestens auf Null, d.h. direkt auf Null oder einen negativen Abstandsfehler - Δx und die anderen Abstandsfehler ± Δx entsprechend dem Korrekturwert korrigiert. Bei der Korrektur des maximalen positiven Abstandsfehlers + Δx_{MAX} auf Null ist der Korrekturwert für alle Abstandsfehler somit gleich dem maximalen positiven Abstandsfehler + Δx_{MAX}.

In dem in Fig. 3a gezeigten Beispiel erfolgt eine rechnerische Korrektur der Abstandsfehler. In diesem Fall wird somit der maximale positive Abstandsfehler + Δx_{D} der Gravierstichelspitze des vierten Gravierorgans (3_{D}) gemäß der Gleichung Δx_{D}* = Δx_{D} - Δx_{Max} = 0 auf Null gesetzt und die Abstandsfehler ± Δx_{A}, ± Δx_{B} und ± Δx_{C} der Gravierstichelspitzen des ersten, zweiten und dritten Gravierorgans .(3_{A}, 3_{B}, 3_{C}) gemäß der Gleichungen Δx_{A}* = Δx_{A} - Δx_{MAX}, der Gleichung Δx_{B}* = Δx_{B} - Δx_{MAX} und der Gleichung Δx_{C}* = Δx_{C}- Δx_{MAX} korrigiert

In einem Verfahrensschritt [IV] erfolgt die Gravur der Gravierstränge (A, B) mit den fehlerhaft zueinander positionierten Gravierorganen (3). Während der Gravur der Gravierstränge (A, B) werden die durch die Grobpositionierung der Gravierorgane (3) verursachten und im Verfahrensschritt [III] korrigierten Abstandsfehler -Δx* durch eine "elektronische Verschiebung" der Gravierstränge auf dem Druckzylinder (1) derart kompensiert, daß die Gravierstränge trotz der Abstandsfehler der Gravierstichelspitzen die vorgegebenen Strangbreiten (SB) aufweisen.

Die elektronische Verschiebung der Gravierstränge während der Gravur wird dadurch erreicht, daß zunächst Startvektoren (SV) in Richtung der X-Achse des XY-Koordinatensystems definiert werden, die den im Verfahrensschritt [III] korrigierten Abstandsfehlern -Δx* entsprechen und daß die zeitliche Aufbereitung und Bereitstellung der für die verschobenen Gravierlinien relevanten Graviersteuersignalwerte (GS) durch die Startvektoren (SV) in Abhängigkeit von den durch die Vorschubbewegung ereichten axialen Positionen der einzelnen Gravierorgane (3) bzw. des Gravierwagens (4) relativ zum Druckzylinder (1) gesteuert wird.

Bei Gravurstart beginnt dasjenige Gravierorgan (3), dessen Abstandsfehler zu Null kompensiert worden ist, mit der Gravur der Start-Gravierlinie (SGL) des zugehörigen Gravierstranges unmittelbar an der durch die Grobpositionierung des Gravierorgas (3) eingenommenen axialen Istposition. Die anderen noch mit Abstandsfehlern -Δx* behafteten Gravierorgane (3) beginnen verzögert mit der Gravur der Start-Gravierlinien (SGL) der entsprechenden Gravierstränge, nachdem die Gravierorgane (3), jeweils ausgehend von der durch die Grobeinstellung des Gravierorgans (3) eingenommenen axialen Position, einen dem betreffenden Startvektor (SV) entsprechenden Vorschubweg zurückgelegt haben.

In dem in Fig. 3a dargestellten Beispiel beginnt somit das Gravierorgan (3_{D}) mit der unmittelbaren Gravur der Start-Gravierlinie (SGL_{D}) des Gravierstranges (D), während die anderen Gravierorgane (3_{A}, 3_{B}, 3_{C}) erst nach Zurücklegen einer dem jeweiligen Startvektor (SV_{A}, SV_{B}, SV_{C}) entsprechenden Wegstrecke mit der Gravur der Start-Gravierlinien (SGL_{A}, SGL_{B}, SGL_{C}) der Gravierstränge (A, B, C) beginnen.

Mit Hilfe der Startvektoren (SV) wird die Aufbereitung und Bereitstellung der Graviersteuersignalwerte (GS) derart gesteuert, daß die zur Gravur der verschobenen Start-Gravierlinien (SGL) relevanten Graviersteuersignalwerte (GS) zu den Zeitpunkten an die Gravierorgane (3) gegeben werden, zu denen die Gravierstichelspitzen der Gravierorgane (3) bei der Vorschubbewegung des Gravierwagens (4) jeweils die axiale Position der verschobenen Start-Gravierlinie (SGL) erreicht haben.

Die Gravurdaten (GD) für die Gravierorte (P_{G}) auf den einzelnen Gravierlinien werden im Ausführungsbeispiel durch eine um die betreffenden axialen Startvektoren (VS) verschobene Interpolationsrechnung in den Rasterrechnern (12) erzeugt. Zur Durchführung der um die Startvektoren (VS) verschobenen Interpolationsrechnung werden bei dem beschriebenen Ausführungsbeispiel die x-Startpunkte für die Interpolationsrechnung auf der X-Achse des XY-Koordinatensystems entgegen der Vorschubrichtung um die jeweiligen Startvektor (SV), ausgehend von den x-Anfangsadressen der entsprechenden Bildatendateien, verschoben. Die Startpunktverschiebung entspricht einer Verschiebung der durch die Ortskoordinaten (x, y) gesteuerten Interpolationsfenster (18) um die jeweiligen Startvektoren (SV) in den Rasterrechnern (12).

Da die gemessenen Abstandsfehler ± Δx und damit auch die Startvektoren (SV) einem Vielfachen des Gravierlinienabstandes plus/minus einem axialen Restfehler betragen können, "passen" die Gravierlinien nicht zu dem Gravuraster, das für die Gravur mit exakt positionierten Gravierorganen (3) maßgebend ist. Durch die um die Startvektoren (SV) verschobene Interpolation werden die Gravurdaten (GD) jeweils genau für die um die Restfehler versetzten Gravierlinien interpoliert, wodurch eine hohe Interpolationsgenauigkeit und damit auch trotz der fehlpositionierten Gravierorgane (3) eine hohe Genauigkeit bei der Gravur der Gravierstränge erreicht wird.

Innerhalb der Wegstrecken, welche die Gravierorgane (3) von den Istpositionen zu den Start-Gravierlinien (SGL) zurücklegen, muß dafür gesorgt werden, daß keine Information auf dem Druckzylinder (1) d.h. ein "Superweiß" graviert wird, bei dem die Gravierstichelspitzen nicht die Mantelfläche des Druckzylinders (1) berühren. Falls die Bilddatendateien "weiße Ränder" mit der Gravierinformation "Super-weiß" aufweisen und die Startvektoren (SV) innerhalb der "weißen Ränder" der Bilddateien liegen, werden die Gravurdaten "Superweiß" interpoliert und als Graviersteuersignalwerte (GS) an die Gravierorgane (3) gegeben.

Falls das nicht der Fall ist, müssen die innerhalb der Wegstrecken interpolierten Gravurdaten (GD) bzw. die Graviersteuersignalwerte (GS), die nicht für die Gravur der Gravierstränge relevant sind, unterdrückt werden. Dies kann beispielsweise durch eine entsprechende Steuerung der Gravierverstärker (9) oder, wie im Ausführungsbeispiel, durch Abheben von Gleitfüßen und Schabern mittels der Abhebevorrichtungen in den Gravierorganen (3) gesteuert durch die Gravurfreigabesignale (S) auf den Leitungen (36) erfolgen. Das Abheben von Gleitfüßen und Schabern empfiehlt sich zusätzlich bei der Gravur von "Superweiß", um die Mantelfläche des Druckzylinders (1) vor Beschädigungen zu schützen.

Fig. 3b zeigt zur Erläuterung der Gravursteuerung in Verbindung mit Fig. 3a in schematischer Form die Abläufe der Interpolation bei der Gravur der vier Gravurstränge (A, B, C D) in Abhängigkeit von den x-Koordinaten. Dargestellt ist die Verschiebung der Interpolation um die jeweiligen Startvektoren SV_{A}, SV_{B} und SV_{C}, wobei der Startvektor SV_{D}= 0 aufgrund der im Verfahrensschritt [III] vorgenommenen elektronischen Kompensation des maximalen Abstandsfehlers zu Null ist. Die nicht schraffierten Impulsflächen sollen andeuten, daß bereits interpoliert wird, aber die interpolierten Gravurdaten (GD) nicht verwendet werden. Die schraffierten Impulsflächen deuten dagegen an, daß die interpolierten Gravurdaten (GD) in die Graviersteuersignalwerte (GS_{A}, GS_{B}, GS_{C}, GS_{D}) umgewandelt und den Gravierorganen (3A, 3B, 3C, 3D) zugeführt werden.

In Fig. 3c ist zur Erläuterung der Gravursteuerung in Verbindung mit Fig. 3a und Fig. 3b die Bereitstellung der Graviersteuersignalwerte (GS_{A}, GS_{B}, GS_{C}, GS_{D}) für die Gravierorgane (3A, 3B, 3C, 3D) in Abhängigkeit von den x-Koordinaten bei der Gravur der vier Gravierstränge (A, B, C, D) dargestellt.

Fig. 3d zeigt das Ergebnis der elektronischen Verschiebung der Gravierstränge (A, B, C, D) bei der Gravur zwecks Kompensation der Abstandsfehler der fehlpositionierten Gravierorgane (3). Aus der Darstellung ist ersichtlich, daß alle Gravierstränge (A, B, C, D) trotz der vor der Gravur nur fehlerhaft eingestellten Gravierorganabstände genau die geforderten Strangbreiten (SB) aufweisen.

Fig. 4 erläutert den Fall, daß im Verfahrensschritt [III] der maximale Abstandsfehler + △x_{MAX} mechanisch korrigiert wird. Bei der mechanischen Korrektur wird der maximale Abstandsfehler + Δx_{MAX} dadurch auf Null gesetzt, daß der Gravierwagen (4) mit den grob positionierten Gravierorganen (3) mindstens um den maximalen Abstandsfehler + Δx_{MAX} entgegen der Vorschubrichtung verschoben wird. Dadurch wird die Gravierstichelspitze desjenigen Gravierorgans (3), das den maximalen positiven Abstandsfehler + Δx_{MAX} aufweist, auf der zugehörigen Referenzposition (RP) positioniert. Die Gravierstichelspitzen der anderen Gravierorgane (3) weisen dann die entsprechend korrigierten mechanischen Abstandsfehler - Δx* auf.

Fig. 4a, in der dieselben Abstandsfehler wie in Fig. 3a zugrunde gelegt sind, zeigt die Verhältnisse nach Verschieben des Gravierwagens (4). Durch die Verschiebung wurde der maximale positive Abstandsfehler + ΔX_{D} der Gravierstichelspitze des vierten Gravierorgans (3_{D}) auf Null gebracht, während die Abstandsfehler ± Δx_{A}, ± Δx_{B} und ± Δx_{C} der Gravierstichelspitzen des ersten, zweiten und dritten Gravierorgans .(3_{A}, 3_{B}, 3_{C}) durch die Verschiebung auf die Werte -Δx_{A}*, -Δx_{B}*und -Δx_{C}* korrigiert wurden.

Fig. 4b zeigt wiederum zur Erläuterung der Gravursteuerung in Verbindung mit Fig. 4a in schematischer Form die Abläufe der Interpolation bei der Gravur der vier Gravurstränge (A, B, C D) in Abhängigkeit von den x-Koordinaten.

In Fig. 4c ist wiederum zur Erläuterung der Gravursteuerung in Verbindung mit Fig. 4a und Fig. 4b die Bereitstellung der Graviersteuersignalwerte (GS_{A}, GS_{B}, GS_{C}, GS_{D}) für die Gravierorgane (3A, 3B, 3C, 3D) in Abhängigkeit von den x-Koordinaten bei der Gravur der vier Gravierstränge (A, B, C, D) dargestellt.

Fig. 4d zeigt das Ergebnis der elektronischen Verschiebung der Gravierstränge (A, B, C, D) bei der Gravur zwecks Kompensation der Abstandsfehler der fehlpositionierten Gravierorgane (3). Aus der Darstellung ist ersichtlich, daß wiederum alle Gravierstränge (A, B, C, D) trotz der vor der Gravur nur fehlerhaft eingestellten Gravierorganabstände genau die geforderten Strangbreiten (SB) aufweisen.

Die Erfindung ist nicht auf die dargestellten Ausführungsbeispiele beschränkt.

Alternativ zu elektromagnetischen Gravierorganen mit Graviersticheln als Schneidwerkzeuge können beispielsweise auch Elektronenstrahl- oder Lasergravierorgane verwendet werden.

Auch für die Positionsmeßeinrichtung (27, 28, 29) sind andere Ausführungsformen denkbar.

Anstelle der Auswertung des Videobildes gegenüber einer "elektronischen" Meßmarke zur Ermittlung der Abstandsfehler ± Δx_{A} kann der Meßwagen (27) auch nacheinander auf die Istpositionen und die Referenzpositionen verschoben und die Abstandsfehler ± Δx direkt aus den Ortskoordinatendifferenzen des Meßwagens (31) in den beiden Positionen festgestellt werden.

Zur Positionierung des Meßwagens (27) auf die Referenzpositionen und zum Ausmessen der axialen Abstandsfehler ± Δx zwischen den Istpositionen und den Referenzpositionen kann beispielsweise auch ein handelsübliches Längenmeßsystem MR-MAGNESCALE ® der Firma Sony Magnescale Inc. Tokyo, JP, verwendet werden. In diesem Fall ist in Achsrichtung ein magnetisch lesbarer Maßstab angeordnet, der von einem am Meßwagen (27) befindlichen Lesekopf gelesen und ausgewertet wird. Die Ermittlung der Abstandsfehler ± Δx_{A} kann beispielsweise auch nach einem interferometrischen Meßverfahren mit einem an dem Meßwagen (27) montierten Interferometer erfolgen.

Alternativ zu dem in Fig. 1 dargestellten Ausführungsbeispiel, bei dem die Gravurdaten (GD) durch Interpolation gewonnen werden, können die Gravurdaten (GD) bereits in dem erforderlichen Gravurraster vorliegen. Dann entfallen die Rasterrechner (12) und die Bilddatenspeicher (13). In diesem Fall werden die für die elektronische Kompensation der Abstandsfehler (Δx*) bei der Gravur der Gravierstränge benötigten Gravurdaten (GD) durch eine um die Startvektoren (VS) geänderte Adressierung der Gravurdatenspeicher (11) gewonnen.

Das erfindungsgemäße Verfahren kann sowohl bei der Gravur von kreisförmigen Gravierlinien mit schrittweisem Vorschub als auch bei der Gravur einer helixförmigen Gravierlinie mit kontinuierlichem Vorschub verwendet werden. Im Fall der Gravur einer helixförmigen Gravierlinie ergeben sich durch die Fehlpositionierung der Garvierorgane Abstandsfehler in X- und Y-Richtung, und die Startvektoren (VS) werden aus den jeweiligen axialen Abstandsfehlern als X-Vektorkomponenten (VSₓ) und einer Y-Vektorkomponente (SV_{y}) ermittelt, die sich aus der Steigung der Helix ergibt.

Das erfindungsgemäße Verfahren ist insbesondere zur Gravur einer großen Anzahl von Graviersträngen auf einem Druckzylinder geeignet. Da eine Feinpositionierung sämtlicher an der Gravur beteiligten Gravierorgane auf dem Gravierwagen entfällt, wird die Vorbereitungsphase in vorteilhafter Weise wesentlich verkürzt und trotzdem eine hohe Graviergenauigkeit bei der Gravur erreicht. Außerdem ist die Gravurgenauigkeit im wesentlichen unabhängig von der Geschicklichkeit eines Bedieners.

## Patentansprüche

1. Verfahren zur Gravur von Druckzylindern für den Tiefdruck in einer elektronischen Graviermaschine, bei dem
- mindestens zwei in Achsrichtung des Druckzylinders (1) nebeneinander liegende Gravierstränge (A, B) vorgegebener Strangbreiten (SB) mit jeweils einem zugeordneten Gravierorgan (3) graviert werden,
- die Gravierorgane (3) jeweils eine Folge von in einem Gravurraster (15) angeordneten Näpfchen in den rotierenden Druckzylinder (1) gravieren,
- Graviersteuersignale (GS) zur Ansteuerung der Gravierorgane (3) durch Überlagerung von Graviersignalen (G), welche die zu gravierenden Tonwerte repräsentieren, mit einem periodischen Rastersignal (R) zur Erzeugung des Rasters gebildet werden,
- die Gravierorgane (3) zur flächenhaften Gravur der Näpfchen eine in Achsrichtung des Druckzylinders (1) gerichtete Vorschubbewegung an dem Druckzylinder (1) entlang ausführen und
- vor der Gravur die axialen Abstände der Gravierorgane (3) zueinander eingestellt werden, **dadurch gekennzeichnet, daß** vor der Gravur
- für jedes Gravierorgan (3) eine axiale Referenzposition (RP) vorgegeben wird, wobei die axialen Abstände der Referenzpositionen (RP) zueinander den vorgegebenen Strangbreiten (SB) der Gravierstränge (A, B) entsprechen,
- die Gravierorgane (3) grob auf ihren Referenzpositionen (RP) positioniert werden,
- die axialen Abstandsfehler (Δx) zwischen den Referenzpositionen (RP) und den aufgrund der Grobpositionierung tatsächlich eingenommenen Istpositionen der Gravierorgane (3) gemessen werden, bei der Gravur
- die Gravierorgane (3) mit den durch ihre Grobpositionierung bedingten fehlerhaften Abständen zueinander die Vorschubbewegung am Druckzylinder (1) entlang ausführen und
- die Abstandsfehler (Δx) durch eine verschobene Gravur der Gravierstränge (A, B) auf dem Druckzylinder (1) derart kompensiert werden, daß trotz der fehlerhaften Abstände der Gravierorgane (3) zueinander die Gravierstränge (A, B) die vorgegebenen Strangbreiten (SB) aufweisen.

2. Verfahren nach Anspruch 1, **dadurch gekennzeichnet, daß**
- die Gravierorgane (3) auf einem Gravierwagen (4) verschiebbar und arretierbar angeordnet sind,
- die Gravierorgane (3) grob auf ihren Referenzpositionen (RP) positioniert und in den aufgrund der Grobpositionierung eingenommenen Istpositionen auf dem Gravierwagen (4) arretiert werden und
- der Gravierwagen (4) mit den arretierten Gravierorganen (3) bei der Gravur die Vorschubbewegung am Druckzylinder (1) entlang ausführt.

3. Verfahren nach Anspruch 1 oder 2, **dadurch gekennzeichnet, daß**
- die Näpfchen auf kreisförmig um den Druckzylinder (1) verlaufenden Gravierlinien graviert werden und
- die Gravierorgane (3) bzw. der Gravierwagen (4) jeweils nach der Gravur einer Gravierlinie einen dem Gravierlinienabstand entsprechenden Vorschubschritt ausführen.

4. Verfahren nach einem der Ansprüche 1 bis 3, **dadurch gekennzeichnet, daß**
- bei der Messung der Abstandsfehler (± Δx) unterschieden wird, ob die Istpositionen der Gravierorgane (3) in Vorschubrichtung gesehen rechts (positive Abstandsfehler+Δx) oder links (negative Abstandsfehler -Δx) der entsprechenden Referenzpositionen (RP) liegen,
- falls positive Abstandsfehler (+Δx) gemessen werden, der maximale positive Abstandsfehler (+Δx_{MAX}) ermittelt wird,
- der maximale positive Abstandsfehler (+Δx_{Max}) durch Subtraktion eines Korrekturwertes mindestens auf Null und die anderen Abstandsfehler (± Δx) um den Korrekturwert korrigiert werden, wobei der Korrekturwert bei Korrektur des maximalen positiven Abstandsfehlers (+Δx_{Max}) auf Null gleich dem maximalen positiven Abstandsfehler ist und
- die korrigierten Abstandsfehler (Δx*) durch die verschobene Gravur der Gravierstränge (A, B) auf dem Druckzylinder (1) kompensiert werden.

5. Verfahren nach einem der Ansprüche 1 bis 3, **dadurch gekennzeichnet, daß**
- bei der Messung der Abstandsfehler (± Δx) unterschieden wird, ob die Istpositionen der Gravierorgane (3) in Vorschubrichtung gesehen rechts (positive Abstandsfehler +Δx) oder links (negative Abstandsfehler -Δx) der entsprechenden Referenzpositionen (RP) liegen,
- falls positive Abstandsfehler (+Δx) gemessen werden, der maximale positive Abstandsfehler (+Δx_{MAX}) ermittelt wird,
- durch Verschieben des Gravierwagens (4) um einen Korrekturwert entgegen der Vorschubrichtung der maximale positive Abstandsfehler (+Δx_{Max}) mindestens auf Null und die anderen Abstandsfehler (± Δx) um den Korrekturwert mechanisch korrigiert werden, wobei der Korrekturwert bei Korrektur des maximalen positiven Abstandsfehlers (+Δx_{Max}) auf Null gleich dem maximalen positiven Abstandsfehler ist und
- die korrigierten Abstandsfehler (Δx*) durch die verschobene Gravur der Gravierstränge (A, B) auf dem Druckzylinder (1) kompensiert werden.

6. Verfahren nach einem der Ansprüche 1 bis 5, **dadurch gekennzeichnet, daß** die Istposition eines Gravierorgans (3) durch eine senkrecht zur Achse des Druckzylinders (1) und durch das die Näpfchen erzeugende Element des Gravierorgans (3) verlaufende Ebene definiert ist.

7. Verfahren nach Anspruch 6, **dadurch gekennzeichnet, daß** die Istposition eines Gravierorgans (3) durch die Spitze des Gravierstichels eines mechanischen Gravierorgans (3) definiert wird.

8. Verfahren nach Anspruch 6, **dadurch gekennzeichnet, daß** die Istposition eines Gravierorgans (3) durch die Lage mindestens eines probeweise mit dem betreffenden Gravierorgan (3) auf dem Druckzylinder (1) gravierten Näpfchens definiert wird.

9. Verfahren nach einem der Ansprüche 1 bis 9, **dadurch gekennzeichnet, daß** die Abstandsfehler (± Δx) der grob positionierten Gravierorgane (3) zu ihren Referenzpositionen (RP) mittels einer Videokamera (28) und einer Bildauswertestufe (29) einer Positionsmeßeinrichtung (27, 28, 29) ermittelt werden.

10. Verfahren nach Anspruch 9, **dadurch gekennzeichnet, daß** die Videokamera (28) in der Graviermaschine auf einem Meßwagen (27) in Achsrichtung des Druckzylinders (1) positionierbar angeordnet ist.

11. Verfahren nach Anspruch 10, **dadurch gekennzeichnet, daß** die Videokamera (28) mittels eines Antriebs (31) für den Meßwagen (27) automatisch auf den Referenzpositionen (RP) positioniert wird.

12. Verfahren nach einem der Ansprüche 9 bis 11, **dadurch gekennzeichnet, daß** zur Messung des Abstandsfehlers (± Δx) eines grob positionierten Gravierorgans (3)
- die Videokamera (28) mittels des Meßwagens (27) auf der zugehörigen Referenzposition (RP) des Gravierorgans (3) positioniert wird,
- die Videokamera (28) ein Videobild der Gravierstichelspitze des betreffenden Gravierorgans (3) oder ein Videobild mindestens eines mit dem betreffenden Gravierorgan (3) probeweise auf dem Druckzylinder (1) gravierten Näpfchens als Istposition des betreffenden Gravierorgans (3) aufnimmt und
- der Abstandsfehler (± Δx) zwischen der Istposition des Gravierorgans (3) und der zugehörigen Referenzposition (RP) durch elektronische Auswertung des Videobildes in der Bildauswertestufe (29) festgestellt wird.

13. Verfahren nach einem der Ansprüche 9 bis 11, **dadurch gekennzeichnet, daß** zur Messung des Abstandsfehlers (± Δx) eines grob positionierten Gravierorgans (3)
- die Videokamera (28) ein Videobild der Gravierstichelspitze des betreffenden Gravierorgans (3) oder ein Videobild mindestens eines mit dem betreffenden Gravierorgan (3) probeweise auf dem Druckzylinder (1) gravierten Näpfchens als Istposition des betreffenden Gravierorgans (3) aufnimmt,
- der Meßwagen (27) in eine Meßposition gebracht wird, in der die Istposition des Gravierorgans (3) mit einer Bezugsmarke des Meßwagens (27) übereinstimmt,
- der Meßwagen (27) auf der zugehörigen Referenzposition (RP) positioniert wird und
- der Abstandsfehler (± Δx) aus der Wegdifferenz des Meßwagens (27) zwischen Meßposition und Referenzposition (RP) ermittelt wird.

14. Verfahren nach einem der Ansprüche 9 bis 13, **dadurch gekennzeichnet, daß** zur Ermittlung der Abstandsfehler (± Δx) aller grob positionierten Gravierorgane (3)
- die Videokamera (28) nacheinander auf die einzelnen Referenzpositionen (RP) der Gravierorgane (3) positioniert wird,
- in jeder Referenzposition (RP) das zugehörige Gravierorgan (3) grob auf die Referenzposition (RP) eingestellt wird und
- in jeder Referenzposition (RP) der Abstandsfehler (± Δx) durch Auswertung des mit der Videokamera (28) aufgenommenen Videobildes der Gravierstichelspitze ermittelt wird.

15. Verfahren nach einem der Ansprüche 9 bis 13, **dadurch gekennzeichnet, daß** zur Ermittlung der Abstandsfehler (± Δx) aller grob positionierten Gravierorgane (3)
- die Gravierorgane (3) grob auf den zugehörigen Referenzpositionen (RP) positioniert werden,
- mit jedem Gravierorgan (3) probeweise mindestens ein Näpfchen auf dem Druckzylinder (1) graviert wird,
- die Videokamera (28) nacheinander auf die einzelnen Referenzpositionen (RP) positioniert wird und
- in jeder Referenzposition (RP) das zugehörige Gravierorgan (3) grob auf die Referenzposition (RP) eingestellt wird und
- in jeder Referenzposition (RP) der Abstandsfehler (± Δx) durch Auswertung des mit der Videokamera (28) aufgenommenen Videobildes des probeweise gravierten Näpfchens ermittelt wird.

16. Verfahren nach einem der Ansprüche 9 bis 15, **dadurch gekennzeichnet, daß** eine Hilfseinrichtung (34, 35) vorgesehen ist, die ein Signal erzeugt, sobald sich ein Gravierorgan (3) bei der Grobpositionierung innerhalb des Meßbereiches der Positionsmeßeinrichtung (27, 28, 29) befindet.

17. Verfahren nach Anspruch 16, **dadurch gekennzeichnet, daß** die Hilfseinrichtung (34, 35) als Lichtschranke ausgebildet ist.

18. Verfahren nach einem der Ansprüche 1 bis 17, **dadurch gekennzeichnet, daß** zur Kompensation der korrigierten Abstandsfehler (Δx*) bei der Gravur der Gravierstränge (A, B) auf dem Druckzylinder (1)
- dasjenige Gravierorgan (3), dessen maximaler positiver Abstandsfehler mindestens zu Null korrigiert wurde, bei Gravurstart unmittelbar in seiner Istposition mit der Gravur des entsprechenden Gravierstranges beginnt,
- die anderen Gravierorgane (3) jeweils um die korrigierten Abstandsfehler (Δx*) verschoben mit der Gravur der zugehörigen Gravierstränge beginnen, nachdem sie den korrigierten Abstandsfehlern (Δx*) entsprechende axiale Vorschubwege aus ihren Istpositionen zurückgelegt haben,
- axiale Startvektoren (SV) generiert werden, deren Längen den korrigierten Abstandsfehlern (Δx*) entsprechen und
- die Bereitstellung der Gravurdaten (GD), die zur Gravur der Näpfchen auf den ortsverschobenen Gravierlinien benötigt werden, durch die axialen Startvektoren (SV) gesteuert wird.

19. Verfahren nach Anspruch 18, **dadurch gekennzeichnet, daß** für jeden Gravierstrang (A, B)
- die Gravurdaten (GD) für die durch das Druckraster (15) bestimmten Gravierorte durch eine Interpolationsrechnung aus Bilddaten (BD) erzeugt werden und
- der axiale Startpunkt für die Interpolationsrechnung von der Start-Gravierlinie (SGL) des betreffenden Gravierstranges (A, B) um den axialen Startvektor (VS) auf die Istposition des Gravierorgans (3) bei Gravierbeginn entgegen der Vorschubrichtung verschoben wird.

20. Verfahren nach Anspruch 18 oder 19, **dadurch gekennzeichnet, daß** für jeden Gravierstrang (A, B)
- die Bilddaten (BD) in einem Originalraster (14) vorliegen,
- ein Klassenfeld (16) von der Größe einer Rastermasche des Originalrasters (14) festgelegt und das Klassenfeld (16) in Interpolationsklassen darstellende Teilfelder (17) unterteilt wird,
- für die einzelnen Interpolationsklassen Gewichtungskoeffizienten abrufbar gespeichert werden,
- um das Klassenfeld (16) ein Interpolationsfenster (18) festgelegt wird, das jeweils so viele Bilddaten (BD) umfaßt wie an der Berechnung eines Gravurdatums (GD) des Gravurrasters (15) beteiligt sind,
- das Klassenfeld (16) mit dem Interpolationsfenster (18) bei der Gravur synchron mit der Vorschubbewegung des Gravierorgans (3) und der Drehbewegung des Druckzylinders (1) über das Originalraster (14) verschoben wird, bis ein Gravierort des Gravurrasters (15) innerhalb des verschobenen Klassenfeldes (16) liegt,
- das Teilfeld (17), in dem der Gravierort fällt, festgestellt wird,
- die Gewichtungskoeffizienten der dem festgestellten Teilfeld (17) zuvor zugeordneten Interpolationsklasse aufgerufen werden und
- das Gravurdatum (GD) des Gravierortes mit Hilfe der aufgerufenen Gewichtungskoeffizienten aus den im Interpolationsfenster (18) liegenden Bilddaten (BD) berechnet wird.

21. Verfahren nach Anspruch 20, **dadurch gekennzeichnet, daß** das Interpolationsfenster (18) gegenüber der Start-Gravierlinie (SGL) eines Gravierstranges (A, B) um den zugehörigen axialen Startvektor (VS) auf die Istposition des Gravierorgans (3) bei Gravierbeginn entgegen der Vorschubrichtung verschoben wird.

22. Verfahren nach einem der Ansprüche 1 bis 21, **dadurch gekennzeichnet, daß** die vorgegebenen Referenzpositionen (RP) mindestens annähernd mit den gewünschten Startpositionen der Gravierstränge (A, B) auf dem Druckzylinder (1) übereinstimmen.

23. Verfahren nach einem der Ansprüche 1 bis 22, **dadurch gekennzeichnet, daß** der Gravierwagen (4) vor der Gravur derart verschoben wird, daß die Istposition mindestens eines der Gravierorgane (3) mit der gewünschten Startposition eines Gravierstranges (A, B) auf dem Druckzylinder (1) übereinstimmt.

24. Verfahren nach einem der Ansprüche 1 bis 23, **dadurch gekennzeichnet, daß** die Gravierorgane (3) während ihrer axialen Vorschubwege von den Istpositionen zu den Start-Gravierlinien (SGL) ein "Superweiß" gravieren.

25. Verfahren nach einem der Ansprüche 1 bis 24, **dadurch gekennzeichnet, daß** die Abhebevorrichtungen für Schaber und Gleitfuß der Gravierorgane (3) während ihrer axialen Vorschubwege von den Istpositionen zu den Start-Gravierlinien (SGL) von dem Druckzylinder (1) abgehoben werden.

26. Graviermaschine zur Gravur von mindestens zwei in Achsrichtung eines Druckzylinders (1) nebeneinander liegenden Graviersträngen (A, B) vorgegebener Strangbreiten (SB) mit jeweils einem zugeordneten Gravierorgan (3), bestend aus
- einem rotationsfähig gelagerten Druckzylinder (1), der von einem ersten Antrieb (2) gedreht wird,
- einem Gravierwagen (4), der mittels eines zweiten Antriebs (6) in Achsrichtung des Druckzylinders (1) bewegbar ist,
- Gravierorganen (3) zur Gravur der Gravierstränge (A, B), welche auf dem Gravierwagen (4) verschiebbar und arretierbar angeordnet sind und
- einer Signalaufbereitungsstufe (9, 10) zur Erzeugung von Graviersteuersignalen (GS) für die Gravierorgane (3), **gekennzeichnet durch**
- eine Positionsmeßeinrichtung (27, 28, 29) zur Messung der axialen Abtands-fehler (± Δx) zwischen vorgegebenen axialen Referenzpositionen (RP) für die Gravierorgane (3) und Istpositionen, welche die Gravierorgane (3) bei einer groben Positionierung auf die vorgegebenen Referenzpositionen (RP) tatsächlich eingenommen haben und
- Mittel (11, 12, 22) zur Kompensation der gemessenen Abstandsfehler (± Δx) **durch** eine verschobene Gravur der Gravierstränge (A, B) auf dem Druckzylinder (1) und **durch** eine entsprechend verschobene Bereitstellung der Graviersteuersignalwerte (GS) für die Gravierorgane (3).

27. Graviermaschine nach Anspruch 26, **dadurch gekennzeichnet, daß** die Positionsmeßeinrichtung (27, 28, 29) aus folgenden Komponenten besteht:
- einer auf einem Meßwagen (27) montierten Videokamera (28) zur Aufnahme eines Videobildes der Gravierstichelspitze eines Gravierorgans (3) oder eines probeweise mit dem Gravierorgan (3) gravierten Näpfchens als Istposition des Gravierorgans (3) und
- einer Bildauswertestufe (29) zur Ermittlung der Abstandsfehler (± Δx) zwischen den Istpositionen der Gravierorgane (3) und den vorgegebenen Referenzpositionen (RP).durch Auswertung des von der Videokamera aufgenommenen Videobildes.

28. Graviermaschine nach Anspruch 26 und 27, **dadurch gekennzeichnet, daß** der Meßwagen (27) mit der Videokamera (28) in Achsrichtung des Druckzylinders (1) verschiebbar ist.

29. Graviermaschine nach einem der Ansprüche 26 bis 27, **dadurch gekennzeichnet, daß** der Meßwagen (27) mit der Videokamera (28) durch einen Antrieb (31) automatisch auf die vorgegebenen axialen Referenzpositionen (RP) positionierbar ist.

30. Graviermaschine nach einem der Ansprüche 26 bis 28, **dadurch gekennzeichnet, daß**
- ein Rasterrechner (12) vorgesehen ist, in dem die Gravurdaten (GD) durch Interpolation aus in einem Bilddatenspeicher (13) abgelegten Bilddaten (BD) gewonnen werden und
- die Mittel (11, 12,, 22) zur Kompensation der gemessenen Abstandsfehler (± Δx) mit dem Rasterrechner (12) in Wirkverbindung stehen, um die Bereitstellung der Graviersteuersignalwerte (GS) für die Gravierorgane (3) bei der verschobenen Gravur der Gravierstränge (A, B) zu steuern.

31. Positionsmeßeinrichtung für eine Graviermaschine zur Gravur von mindestens zwei in Achsrichtung eines Druckzylinders (1) nebeneinander liegenden Graviersträngen (A, B) vorgegebener Strangbreiten (SB) mit jeweils einem zu geordneten und durch ein Graviersteuersignal (GS) beaufschlagten Gravierorgan (3), **dadurch gekennzeichnet, daß**
- eine auf einem Meßwagen (27) montierte Videokamera (28) vorgesehen ist, um Videobilder der Gravierstichelspitzen der Gravierorgane (3) oder der probeweise mit den Gravierorganen (3) gravierten Näpfchen als tatsächliche Istpositionen der grob auf vorgegebene Referenzpositionen (RP) verschobenen Gravierorgane (3) aufzunehmen,
- der Meßwagen (27) in Achsrichtung des Druckzylinders (1) verschiebbar und auf die vorgegebenen Referenzpositionen (RP) für die Gravierorgane (3) positionierbar ist,
- eine mit der Videokamera (28) verbundene Bildauswertestufe (29) zur Auswertung der aufgenommenen Videobilder vorhanden ist, um Abstandsfehler (± Δx) zwischen den Referenzpositionen (RP) und den tatsächlichen Istpositionen der Gravierorgane (3) zu ermitteln und
- mit der Bildauswertestufe (29) verbundene Mittel (11, 12, 22) vorhanden sind, um die von der Positionsmeßeinrichtung (27, 28, 29) gemessenen Abstandsfehler (± Δx) durch eine verschobene Gravur der Gravierstränge (A, B) auf dem Druckzylinder (1) und durch eine entsprechend verschobene Bereitstellung der Graviersteuersignale (GS) für die Gravierorgane (3) zu kompensieren.

## Claims

1. Method for engraving printing cylinders for rotogravure in an electronic engraving machine, in which
- at least two engraving webs (A, B) of predetermined web widths (SB) adjacent to one another in the direction of the axis of the printing cylinder (1) and with in each case one associated engraving member (3) are engraved,
- the engraving members (3) in each case engrave a series of cells arranged in an engraving grid (15) into the rotating printing cylinder (1),
- engraving control signals (GS) for driving the engraving members (3) are formed by overriding engraving signals (G), representing the tone values to be engraved, with a periodic grid signal (R) to generate the grid,
- the engraving members (3) for two-dimensional engraving of the cells perform a forward feed movement along the printing cylinder (1) aimed in the direction of the axis of the printing cylinder (1),
- before engraving, the axial distances of the engraving members (3) from one another are set, **characterised in that**
before engraving
- an axial reference position (RP) is predetermined for each engraving member (3), wherein the axial distances of the reference positions (RP) from one another correspond to the predetermined web widths (SB) of the engraving webs (A, B),
- the engraving members (3) are positioned roughly at their reference positions (RP),
- the axial distance errors (ΔX) between the reference positions (RP) and the actual positions of the engraving members (3) in fact taken up, based on the rough positioning, are measured, during engraving
- the engraving members (3) with the incorrect distances from one another caused by their rough positioning perform the forward feed movement along the printing cylinder (1) and
- the distance errors (ΔX) are compensated by displaced engraving of the engraving webs (A, B) on the printing cylinder (1) in such a way that in spite of the incorrect distances of the engraving members (3) from one another the engraving webs (A, B) have the predetermined web widths (SB).

2. Method according to Claim 1, **characterised in that**
- the engraving members (3) are arranged on an engraving carriage (4) so as to be movable and stoppable,
- the engraving members (3) are positioned roughly at their reference positions (RP) and are stopped in the actual position on the engraving carriage (4) taken up owing to the rough positioning and
- the engraving carriage (4) with the stopped engraving members (3) performs the forward feed movement along the printing cylinder (1) during engraving.

3. Method according to Claim 1 or 2, **characterised in that**
- the cells are engraved on engraving lines running in circles round the printing cylinder (1) and
- the engraving members (3) or the engraving carriage (4) perform a forward feed step corresponding to the distance between the engraving lines in each case after the engraving of an engraving line.

4. Method according to one of Claims 1 to 3, **characterised in that**
- in measuring the distance errors (±ΔX) it is distinguished whether the actual positions of the engraving members (3), seen in the forward feed direction, are on the right (positive distance errors
- +ΔX) or left (negative distance errors -ΔX) of the corresponding reference positions (RP),
- if positive distance errors (+ΔX) are measured the maximum positive distance error (+ΔX_{MAX}) is determined,
- the maximum positive distance error (+ΔX_{MAX}) is corrected by subtraction of a correction value at least to zero and the other distance errors (±ΔX) are corrected by the correction value, wherein the correction value is equal to the maximum positive distance error on correction of the maximum positive distance error (+ΔX_{MAX}) to zero and
- the corrected distance errors (ΔX*) are compensated by the displaced engraving of the engraving webs (A, B) on the printing cylinder (1).

5. Method according to one of Claims 1 to 3, **characterised in that**
- in measuring the distance errors (±ΔX) it is distinguished whether the actual positions of the engraving members (3), seen in the forward feed direction, are to the right (positive distance errors +ΔX) or left (negative distance errors -ΔX) of the corresponding reference positions (RP),
- if positive distance errors (+ΔX) are measured the maximum positive distance error (+ΔX_{MAX}) is determined,
- by displacing the engraving carriage (4) by a correction value against the forward feed direction the maximum positive distance error (+ΔX_{MAX}) is mechanically corrected at least to zero and the other distance errors (±ΔX) are mechanically corrected by the correction value, wherein the correction value is equal to the maximum positive distance error on correction of the maximum positive distance error (+ΔX_{MAX}) to zero and
- the corrected distance errors (ΔX*) are compensated by the displaced engraving of the engraving webs (A, B) on the printing cylinder (1).

6. Method according to one of Claims 1 to 5, **characterised in that** the actual position of an engraving member (3) is defined by a plane running perpendicular to the axis of the printing cylinder (1) and through the element of the engraving member (3) generating the cells.

7. Method according to Claim 6, **characterised in that** the actual position of an engraving member (3) is defined by the tip of the engraving needle of a mechanical engraving member (3).

8. Method according to Claim 6, **characterised in that** the actual position of an engraving member (3) is defined by the position of at least one cell engraved on a trial basis on the printing cylinder (1) by the engraving member (3) concerned.

9. Method according to one of Claims 1 to 9, **characterised in that** the distance errors (±ΔX) of the roughly positioned engraving members (3) from their reference positions (RP) are determined by means of a video camera (28) and an image evaluation stage (29) of a position measuring device (27, 28, 29).

10. Method according to Claim 9, **characterised in that** the video camera (28) is arranged so that it can be positioned in the engraving machine on a measuring carriage (27) in the direction of the axis of the printing cylinder (1).

11. Method according to Claim 10, **characterised in that** the video camera (28) is positioned automatically at the reference positions (RP) by means of a drive (31) for the measuring carriage (27).

12. Method according to one of Claims 9 to 11, **characterised in that** for measuring the distance error (±ΔX) of a roughly positioned engraving member (3)
- the video camera (28) is positioned at the associated reference position (RP) of the engraving member (3) by means of the measuring carriage (27),
- the video camera (28) records a video image of the tip of the needle of the engraving member (3) concerned or a video image of at least one cell engraved on a trial basis on the printing cylinder (1) by the engraving member (3) concerned as the actual position of the engraving member (3) concerned and
- the distance error (±ΔX) between the actual position of the engraving member (3) and the associated reference position (RP) is established by electronic evaluation of the video image in the image evaluation stage (29).

13. Method according to one of Claims 9 to 11, **characterised in that** for measuring the distance error (±ΔX) of a roughly positioned engraving member (3)
- the video camera (28) records a video image of the tip of the needle of the engraving member (3) concerned or a video image of at least one cell engraved on a trial basis on the printing cylinder (1) as the actual position of the engraving member (3) concerned,
- the measuring carriage (27) is put into a measuring position in which the actual position of the engraving member (3) coincides with a reference mark of the measuring carriage (27),
- the measuring carriage (27) is positioned at the associated reference position (RP) and
- the distance error (±ΔX) is determined from the difference in the path of the measuring carriage (27) between measuring position and reference position (RP).

14. Method according to one of Claims 9 to 13, **characterised in that** to determine the distance error (±ΔX) of all the roughly positioned engraving members (3)
- the video camera (28) is positioned in succession at the individual reference positions (RP) of the engraving members (3),
- in each reference position (RP) the associated engraving member (3) is set roughly at the reference position (RP) and
- in every reference position (RP) the distance error (±ΔX) is determined by evaluation of the video image of the tip of the needle recorded by the video camera (28).

15. Method according to one of Claims 9 to 13, **characterised in that** to determine the distance error (±ΔX) of all the roughly positioned engraving members (3)
- the engraving members (3) are roughly positioned at the associated reference positions (RP),
- at least one cell is engraved on a trial basis on the printing cylinder (1) by each engraving member (3),
- the video camera (28) is positioned in succession at the individual reference positions (RP) and
- in each reference position (RP) the associated engraving member (3) is set roughly at the reference position (RP) and
- in each reference position (RP) the distance error (±ΔX) is determined by evaluation of the video image of the cell engraved on a trial basis recorded by the video camera (28).

16. Method according to one of Claims 9 to 15, **characterised in that** an auxiliary device (34, 35) is provided which generates a signal as soon as an engraving member (3) is located in rough positioning inside the measuring range of the position measuring device (27, 28, 29).

17. Method according to Claim 16, **characterised in that** the auxiliary device (34, 35) is constructed as a light barrier.

18. Method according to one of Claims 1 to 17, **characterised in that** to compensate for the corrected distance errors (ΔX*) during engraving of the engraving webs (A, B) on the printing cylinder (1)
- the engraving member (3), the maximum positive distance error of which has been corrected at least to zero, at the start of engraving immediately begins in its actual position on engraving the corresponding engraving web,
- the other engraving members (3) begin, in each case displaced by the corrected distance errors (ΔX*), with the engraving of the associated engraving webs, after they have covered the axial forward feed paths from their actual positions corresponding to the corrected distance errors (ΔX*),
- axial start vectors (SV) are generated, the lengths of which correspond to the corrected distance errors (ΔX*) and
- provision of the engraving data (GD) necessary for the engraving of the cells on the displaced engraving lines is controlled by the axial start vectors (SV).

19. Method according to Claim 18, **characterised in that** for every engraving web (A, B)
- the engraving data (GD) for the engraving sites determined by the printing grid (15) are generated by an interpolation calculation from image data (BD) and
- at the beginning of engraving the axial starting point for the interpolation calculation is displaced by the axial start vector (VS) against the forward feed direction from the start engraving line (SGL) of the engraving web concerned (A, B) to the actual position of the engraving member (3).

20. Method according to Claim 18 or 19, **characterised in that** for every engraving web (A, B)
- the image data (BD) are present in an original grid (14),
- a class field (16) of the size of a grid mesh of the original grid (14) is established and the class field (16) is divided into partial fields (17) representing interpolation classes,
- weighting coefficients are stored which can be recalled for the individual interpolation classes,
- round the class field (16) an interpolation window (18) is established which in each case comprises as many image data (BD) as are involved in the calculation of an engraving datum (GD) of the engraving grid (15),
- the class field (16) with the interpolation window (18) is displaced during engraving synchronously with the forward feed movement of the engraving member (3) and the rotational movement of the printing cylinder (1) over the original grid (14), until an engraving site of the engraving grid (15) is located inside the displaced class field (16),
- the partial field (17) into which the engraving site falls is established,
- the weighting coefficients of the interpolation class previously assigned to the established partial field (17) are invoked and
- the engraving datum (GD) of the engraving site is calculated with the aid of the invoked weighting coefficients from the image data (BD) located in the interpolation window (18).

21. Method according to Claim 20, **characterised in that** at the start of engraving the interpolation window (18) is displaced against the forward feed direction in respect of the starting engraving line (SGL) of an engraving web (A, B) by the associated axial start vector (VS) to the actual position of the engraving member (3).

22. Method according to one of Claims 1 to 21, **characterised in that** the predetermined reference positions (RP) at least approximately coincide with the desired starting positions of the engraving webs (A, B) on the printing cylinder (1).

23. Method according to one of Claims 1 to 22, **characterised in that** before engraving the engraving carriage (4) is displaced in such a way that the actual position of at least one of the engraving members (3) coincides with the desired starting position of one engraving web (A, B) on the printing cylinder (1).

24. Method according to one of Claims 1 to 23, **characterised in that** the engraving members (3) engrave a "super white" during their axial forward feed paths from the actual positions to the start engraving lines (SGL).

25. Method according to one of Claims 1 to 24, **characterised in that** the lifting devices for doctor blade and sliding foot of the engraving members (3) are lifted from the printing cylinder (1) during their axial forward feed paths from the actual positions to the starting engraving lines (SGL).

26. Engraving machine for engraving at least two engraving webs (A, B) of predetermined web widths (SB) located adjacent to one another in the direction of the axis of a printing cylinder (1) with in each case one associated engraving member (3) consisting of
- a rotably mounted printing cylinder (1) which is driven by a first drive (2),
- an engraving carriage (4) which is movable in the direction of the axis of the printing cylinder (1) by means of a second drive (6),
- engraving members (3) for engraving the engraving webs (A, B) which are arranged as displaceable and stoppable on the engraving carriage (4) and
- a signal processing stage (9, 10) for generating engraving control signals (GS) for the engraving members (3), **characterised by**
- a position measuring device (27, 28, 29) for measuring the axial distance errors (±ΔX) between predetermined axial reference positions (RP) for the engraving members (3) and actual positions which the engraving members (3) have in fact taken up on rough positioning at the predetermined reference positions (RP) and
- means (11, 12, 22) for compensating the measured distance errors (±ΔX) by a displaced engraving of the engraving webs (A, B) on the printing cylinder (1) and by a correspondingly displaced provision of the engraving control signal values (GS) for the engraving members (3).

27. Engraving machine according to Claim 26, **characterised in that** the position measuring device (27, 28, 29) consists of the following components:
- a video camera (28) mounted on a measuring carriage (27) for recording a video image of the tip of the needle of an engraving member (3) or a cell engraved on a trial basis by the engraving member (3) as the actual position of the engraving member (3) and
- an image evaluation stage (29) for determining the distance errors (±ΔX) between the actual positions of the engraving members (3) and the predetermined reference positions (RP) by evaluation of the video image recorded by the video camera.

28. Engraving machine according to Claim 26 and 27, **characterised in that** the measuring carriage (27) is displaceable with the video camera (28) in the direction of the axis of the printing cylinder (1).

29. Engraving machine according to one of Claims 26 to 27, **characterised in that** the measuring carriage (27) with the video camera (28) can be automatically positioned at the predetermined axial reference positions (RP) by a drive (31).

30. Engraving machine according to one of Claims 26 to 28, **characterised in that**
- a grid computer (12) is provided in which the engraving data (GD) are obtained by interpolation from image data (BD) deposited in an image data memory (13) and
- the means (11, 12, 22) for compensating for the measured distance errors (±ΔX) are in active connection with the grid computer (12) in order to control the provision of the engraving control signal values (GS) for the engraving members (3) in the displaced engraving of the engraving webs (A, B).

31. Position measuring device for an engraving machine for engraving at least two engraving webs (A, B) of predetermined web length (SB) located adjacent to one another in the direction of axis of an printing cylinder (1) with in each case one associated engraving member (3) acted upon by an engraving control signal (GS), **characterised in that**
- a video camera (28) mounted on a measuring carriage (27) is provided in order to record video images of the tips of the needles of the engraving members (3) or the cells engraved on a trial basis by the engraving members (3) as the true actual position of the engraving members (3) roughly displaced to predetermined reference positions (RP),
- the measuring carriage (27) is displaceable in the direction of the axis of the printing cylinder (1) and can be positioned at the predetermined reference positions (RP) for the engraving members (3)
- there is an image evaluation stage (29) connected to the video camera (28) to evaluate the recorded video images, in order to determine distance errors (±ΔX) between the reference positions (RP) and the true actual positions of the engraving members (3) and
- there are means (11, 12, 22) connected to the image evaluation stage (29) to compensate for the distance errors (±ΔX) measured by the position measuring device (27, 28, 29) by displaced engraving of the engraving webs (A, B) on the printing cylinder (1) and by a correspondingly displaced provision of the engraving control signals (GS) for the engraving members (3).

## Revendications

1. Procédé de gravure de cylindres d'impression pour l'impression en taille douce à l'aide d'une machine à graver électronique, selon lequel :
- on grave au moins deux bandes à graver (A, B) juxtaposées dans la direction axiale du cylindre d'impression (1), ayant des largeurs de bande (SB), prédéterminées, avec un organe de gravure (3), respectif, associé,
- les organes de gravure (3) gravent chacun une succession de cuvettes réparties suivant une trame de gravure (15) dans le cylindre d'impression (1), rotatif,
- on forme les signaux de commande de gravure (GS) pour commander les organes de gravure (3) par la combinaison de signaux de gravure (G) représentant les valeurs de teinte à graver et un signal de trame périodique (R) pour générer la trame,
- les organes de gravure (3) exécutent pour la gravure en surface de cuvettes, un mouvement d'avance par rapport au cylindre d'impression (1), dans la direction de l'axe du cylindre d'impression (1) et,
- avant la gravure, on règle entre eux les intervalles axiaux des organes de gravure (3),
**caractérisé en ce que**
- avant la gravure,
- pour chaque organe de gravure (3) on prédétermine une position de référence axiale (RP),
- les intervalles axiaux des positions de référence (RP) correspondant respectivement aux largeurs de bande prédéterminées (SB) des bandes à graver (A, B),
- on positionne les organes de gravure (3), grossièrement sur leur position de référence (RP),
- on mesure les erreurs de distance axiale (ΔX) entre les positions de référence (RP) et les positions réelles des organes de gravure (3), prises sur la base de leur positionnement grossier effectif, pour la gravure,
- les organes de gravure (3) avec leur intervalle entaché de défaut du fait de leur positionnement grossier, exécutent l'un par rapport à l'autre le mouvement d'avance sur le cylindre d'impression (1), et
- on compense les défauts de distance (ΔX) par une gravure décalée des bandes à graver (A, B) sur le cylindre d'impression (1) de façon que malgré les intervalles erronés des organes de gravure (3) l'un par rapport à l'autre, les bandes à graver (A, B) présentent la largeur de bande prédéterminée (SB).

2. Procédé selon la revendication 1,
**caractérisé en ce que**
- les organes de gravure (3) sont montés coulissants et susceptibles d'être arrêtés sur un chariot de gravure (4),
- les organes de gravure (3) sont positionnés de manière grossière dans leur position de référence (RP) et ils sont arrêtés sur le chariot de gravure (4) sur la base de leur position réelle prise à partir de leur positionnement grossier et,
- les chariots de gravure (4) avec les organes de gravure (3), bloqués, effectuent lors de la gravure, le déplacement d'avance par rapport au cylindre d'impression (1).

3. Procédé selon la revendication 1 ou 2,
**caractérisé en ce qu'**
- on grave des cuvettes suivant des lignes de gravure circulaires entourant le cylindre d'impression (1) et,
- les organes de gravure (3) ou le chariot de gravure (4) exécutent chaque fois après la gravure d'une ligne de gravure, une étape d'avance correspondant à la distance des lignes de gravure.

4. Procédé selon l'une quelconque des revendications 1 à 3,
**caractérisé en ce que**
- lors de la mesure, on distingue l'erreur de distance (± ΔX), pour savoir si la position réelle des organes de gravure (3) est située à droite, vue dans la direction d'avance (erreur de distance positive + ΔX) ou à gauche (erreur de distance négative - ΔX) des positions de référence correspondantes (RP),
- au cas où des erreurs de distance positives (+ΔX) ont été mesurées, on détermine l'erreur de distance maximale positive (+ ΔX_{MAX}),
- on corrige l'erreur de distance positive maximale (+ Δ_{Max}) par soustraction d'une valeur de correction au moins à zéro et on corrige les autres erreurs de distance (± ΔX) de la valeur de correction, et la valeur de correction lors de la correction de l'erreur de distance positive maximale (+ ΔX_{Max}) à zéro étant égale à l'erreur de distance positive maximale et,
- on compense l'erreur de distance corrigée (ΔX*) par la gravure décalée des bandes à graver (A, B) sur le cylindre d'impression (1).

5. Procédé selon l'une quelconque des revendications 1 à 3,
**caractérisé en ce que**
- lors de la mesure, on distingue les erreurs de distance (± ΔX), suivant que la position réelle des organes de gravure (3) dans la direction d'avance est vue à droite (erreur de distance positive + ΔX) ou à gauche (erreur de distance négative - ΔX) des positions de référence correspondantes (RP),
- au cas où on a mesuré des erreurs de distance positives (+ ΔX), on détermine l'erreur de distance maximale positive (+ ΔX_{MAX}),
- par décalage du chariot de gravure (4) d'une valeur de correction dans la direction opposée à la direction d'avance, on corrige l'erreur de distance positive maximale (+ ΔX_{Max}) au moins à zéro et on corrige mécaniquement les autres erreurs de distance (± ΔX) de la valeur de correction,
- la valeur de correction lors de la correction de l'erreur de distance maximale positive (+ ΔX_{Max}) pour zéro étant égale à l'erreur de distance positive maximale et,
- l'erreur de distance corrigée (ΔX*) étant compensée par la gravure décalée des bandes à graver (A, B) sur le cylindre d'impression (1).

6. Procédé selon l'une quelconque des revendications 1 à 5,
**caractérisé en ce que** la position réelle d'un organe de gravure (3) est définie par un plan perpendiculaire à l'axe du cylindre d'impression (1) et passant par l'élément de l'organe de gravure (3) qui réalise les cuvettes.

7. Procédé selon la revendication 6,
**caractérisé en ce que**
la position réelle d'un organe de gravure (3) est définie par la pointe du ciseau de gravure d'un organe de gravure mécanique (3).

8. Procédé selon la revendication 6,
**caractérisé en ce que**
la position réelle d'un organe de gravure (3) est définie par la position d'au moins une cuvette gravée à titre d'essai par l'organe de gravure (3) concerné sur le cylindre d'impression (1).

9. Procédé l'une quelconque des revendications 1 à 8,
**caractérisé en ce que**
l'erreur de distance (± ΔX) des organes de gravure (3) positionnés grossièrement, par rapport à leur position de référence (RP), se détermine à l'aide d'une caméra vidéo (28) et d'un étage d'exploitation d'image (29) d'une installation de mesure de position (27, 28, 29).

10. Procédé selon la revendication 9,
**caractérisé en ce que**
la caméra vidéo (28) est installée sur la machine à graver, sur un chariot de mesure (27) pour pouvoir être positionnée dans la direction axiale du cylindre d'impression (1).

11. Procédé selon la revendication 10,
**caractérisé en ce que**
la caméra vidéo (28) est positionnée automatiquement sur les positions de référence (RP) à l'aide d'un moyen d'entraînement (31) pour le chariot de mesure (27).

12. Procédé selon l'une quelconque des revendications 9 à 11,
**caractérisé en ce que**
pour l'erreur de distance (± ΔX), d'un organe de gravure (3) positionné de manière grossière,
- à l'aide du chariot de mesure (27), la caméra vidéo (28) est positionnée sur la position de référence correspondante (RP) de l'organe de gravure (3),
- la caméra vidéo (28) prend une image vidéo de la pointe du ciseau de gravure de l'organe de gravure (3) correspondant ou une image vidéo d'au moins une cuvette gravée par l'organe de gravure (3) correspondant, à titre d'essai sur le cylindre d'impression (1), comme position réelle de l'organe de gravure (3) concerné et,
- on détermine l'erreur de distance (± ΔX) entre la position réelle de l'organe de gravure (3) et la position de référence concernée (RP) par l'exploitation électronique de l'image vidéo dans l'étage de traitement d'image (29).

13. Procédé selon l'une quelconque des revendications 9 à 11,
**caractérisé en ce que**
- pour mesurer l'erreur de distance (± ΔX) d'un organe de gravure (3) positionné grossièrement,
- la caméra vidéo (28) prend une image vidéo de la pointe du ciseau de gravure de l'organe de gravure (3) correspondant ou une image vidéo d'au moins une cuvette gravée à titre d'essai par l'organe de gravure concerné (3) sur le cylindre d'impression (1), comme position réelle de l'organe de gravure concerné (3),
- on met le chariot de mesure (27) dans une position de mesure dans laquelle la position réelle de l'organe de gravure (3) correspond au repère de référence du chariot de mesure de référence (27),
- on positionne le chariot de mesure (27) sur la position de référence concernée (RP),
- on détermine l'erreur de distance (± ΔX) correspondant à la différence de trajet du chariot de mesure (27) entre la position de mesure et la position de référence (RP).

14. Procédé selon l'une quelconque des revendications 9 à 13,
**caractérisé en ce que**
pour déterminer l'erreur de distance (± ΔX) de tous les organes de gravure (3) positionnés de manière grossière,
- la caméra vidéo (28) est positionnée successivement sur les différentes positions de référence (RP) des organes de gravure (3),
- dans chaque position de référence (RP), on règle l'organe de gravure concerné (3) de manière grossière sur la position de référence (RP), et
- dans chaque position de référence (RP), on détermine l'erreur de distance (± ΔX) par l'exploitation de l'image vidéo prise par la caméra vidéo (28) de la pointe du ciseau de gravure.

15. Procédé selon l'une quelconque des revendications 9 à 13,
**caractérisé en ce que**
- pour déterminer l'erreur de distance (± ΔX) de tous les organes de gravure (3) positionnés grossièrement,
- on positionne les organes de gravure (3) grossièrement sur les positions de référence concernées (RP),
- avec chaque organe de gravure (3), on grave un échantillon d'au moins une cuvette dans le cylindre d'impression (3),
- on positionne successivement la caméra vidéo (28) sur les différentes positions de référence (RP) et
- dans chaque position de référence (RP) on règle l'organe de gravure correspondant (3), grossièrement sur la position de référence (RP) et,
- dans chaque position de référence (RP), on détermine l'erreur de distance (+ ΔX) par l'exploitation de l'image vidéo prise par la caméra vidéo (28) de la cuvette gravée à titre d'échantillon.

16. Procédé selon l'une quelconque des revendications 9 à 15,
**caractérisé par**
une installation auxiliaire (34, 35) qui génère un signal dès qu'un organe de gravure (3) se trouve pour le positionnement grossier, à l'intérieur de la plage de mesure de l'installation de mesure de position (27, 28, 29).

17. Procédé selon la revendication 16,
**caractérisé en ce que**
l'installation auxiliaire (34, 35) est une barrière lumineuse.

18. Procédé selon l'une quelconque des revendications 1 à 17,
**caractérisé en ce que**
- pour compenser l'erreur de distance corrigée (ΔX*) pour la gravure de bande à graver (A, B) sur le cylindre d'impression (1),
- l'organe de gravure (3) dont l'erreur de distance positive, maximale a été au moins corrigée à zéro, commence au départ de la gravure, directement dans sa position réelle ; avec la gravure de la bande à graver correspondante,
- les autres organes de gravure (3) commencent en étant décalés chaque fois de l'erreur de distance corrigée (ΔX*), avec la gravure de la bande à graver correspondante, après avoir parcouru le chemin d'avance, axial correspondant à l'erreur de distance corrigée (ΔX), à partir de leur position réelle,
- on génère des vecteurs de départ axiaux (SV) dont la longueur correspond aux erreurs de distance corrigées (ΔX*) et,
- on commande la fourniture des données de gravure (GD) nécessaire à la gravure des cuvettes sur des lignes de gravure décalées par les vecteurs de démarrage axiaux (SV).

19. Procédé selon la revendication 18,
**caractérisé en ce que**
- pour chaque bande à graver (A, B),
- on génère les données de gravure (GD) pour les emplacements de gravure définis par la trame d'impression (15), en procédant à un calcul par interpolation à partir des données images (BD) et,
- on déplace le point de départ axial pour le calcul de l'interpolation à partir de la ligne de gravure de départ (SGL) de la bande à graver (A, B) correspondante, du vecteur de départ axial (VS) sur la position réelle de l'organe de gravure (3) pour le début de gravure dans la direction opposée à la direction d'avance.

20. Procédé selon la revendication 18 ou 19,
**caractérisé en ce que**
- pour chaque bande à graver (A, B),
- on a les données images (BD) dans une trame d'origine (14),
- on fixe un champ de classes (16) de la taille d'une maille de la trame d'origine (14) et on subdivise le champ (16) en champs partiels (17) représentant les classes d'interpolation,
- pour les différentes classes d'interpolation, on mémorise des coefficients de pondération de manière à pouvoir les appeler,
- autour du champ de classes (16), on fixe une fenêtre d'interpolation (18) qui comprend chaque fois autant de données images (BD) que celles participant au calcul d'une donnée de gravure (GD) dans la trame de gravure (15),
- on décale le champ de classes (16) avec la fenêtre d'interpolation (18) pour la gravure, de manière synchrone avec le mouvement d'avance de l'organe de gravure (3) et le mouvement de rotation du cylindre d'impression (1) par dessus la trame d'origine (14) jusqu'à ce qu'un emplacement de gravure de la trame de gravure (15) se trouve dans le champ de classes (16) décalé,
- on détermine le champ partiel (17) dans lequel se trouve l'emplacement de gravure,
- on appelle les coefficients de pondération de la classe d'interpolation associée préalablement au champ partiel constaté (17) et,
- on calcule la donnée de gravure (GD) de l'emplacement de gravure à l'aide des coefficients de pondération appelés, en partant des données images (BD) situées dans la fenêtre d'interpolation (18).

21. Procédé selon la revendication 20,
**caractérisé en ce qu'**
on place la fenêtre d'interpolation (18) par rapport à la ligne de début de gravure (SGL) d'une bande à graver (A, B), selon le vecteur de départ axial correspondant (VS) sur la position réelle de l'organe de gravure (3) en commençant la gravure dans la direction opposée à la direction d'avance.

22. Procédé selon l'une quelconque des revendications 1 à 21,
**caractérisé en ce que**
les positions de référence prédéterminées (RP) correspondent au moins approximativement avec les positions de départ souhaitées des bandes à graver (A, B) sur le cylindre d'impression (1).

23. Procédé selon l'une quelconque des revendications 1 à 22,
**caractérisé en ce qu'**
on déplace le chariot de gravure (4) avant la gravure de façon que la position réelle d'au moins l'un des organes de gravure (3) corresponde à la position de départ souhaitée d'une bande à graver (A, B) sur le cylindre d'impression (1).

24. Procédé selon l'une quelconque des revendications 1 à 23,
**caractérisé en ce que**
les organes de gravure (3) gravent un « superblanc » pendant une course d'avancée axiale à partir des positions réelles vers les lignes de gravure de départ (SGL).

25. Procédé selon l'une quelconque des revendications 1 à 24,
**caractérisé en ce que**
les dispositifs de soulèvement pour le racleur et le patin des organes de gravure (3) sont soulevés par rapport au cylindre d'impression (1) pendant la course d'avance axiale entre les positions réelles vers les lignes de départ de gravure (SGL),

26. Machine à graver pour graver au moins deux bandes à graver (A, B) juxtaposées dans la direction axiale d'un cylindre d'impression (1), ces bandes ayant des largeurs prédéterminées (SB), en utilisant chaque fois un organe de gravure (3) associé comprenant :
- un cylindre d'impression (1) monté à rotation et entraîné par un premier moyen d'entraînement (2),
- un chariot de gravure (4) déplacé à l'aide d'un second moyen d'entraînement (6) dans la direction axiale du cylindre d'impression (1),
- des organes de gravure (3) pour graver les bandes (A, B), ces organes étant montés coulissants et susceptibles d'être bloqués sur le chariot de gravure (4), et
- un étage de traitement de signal (9, 10) pour générer des signaux de commande de gravure (GS) pour les organes de gravure (3),
**caractérisée par**
- une installation de mesure de position (27, 28, 29) pour mesurer l'erreur de distance axiale (± ΔX) entre des positions de référence axiales prédéterminées (RP) pour les organes de gravure (3) et les positions réelles, ces positions étant celles prises par les organes de gravure (3) lors d'un positionnement grossier sur les positions de référence prédéterminées (RP) et,
- des moyens (11, 12, 22) pour compenser l'erreur de distance mesurée (± ΔX) par une gravure décalée des bandes à graver (A, B) sur le cylindre d'impression (1) et par la fourniture déjà décalée des valeurs des signaux de commande de gravure (GS) pour les organes de gravure (3).

27. Machine de gravure selon la revendication 26,
**caractérisée en ce que**
l'installation de mesure de position (27, 28, 29) comprend les composants suivants :
- une caméra vidéo (28) montée sur un chariot de mesure (27) pour recevoir une image vidéo de la pointe du ciseau de gravure d'un organe de gravure (3) ou d'une petite cuvette, gravée à titre d'échantillon par l'organe de gravure (3) et servant de position de référence pour l'organe de gravure (3), et
- un étage d'exploitation d'image (29) pour déterminer l'erreur de distance (± ΔX) entre les positions réelles des organes de gravure (3) et les positions de référence prédéterminées (RP), par l'exploitation de l'image vidéo prise par la caméra vidéo.

28. Machine de gravure selon les revendications 26 et 27,
**caractérisée en ce que** le chariot de mesure (27) avec la caméra vidéo (28) peut être déplacé dans la direction axiale du cylindre d'impression (1).

29. Machine de gravure selon l'une des revendications 26 et 27,
**caractérisée en ce que**
le chariot de mesure (27) se positionne automatiquement par la caméra vidéo (28), par un moyen d'entraînement (31), automatiquement sur les positions de référence axiales prédéterminées (RP).

30. Machine de gravure selon l'une quelconque des revendications 26 à 28,
**caractérisée par**
- un calculateur de trame (12) qui fournit les données de gravure (GD) par l'interpolation à partir des données d'image (BD) enregistrées dans une mémoire de données d'image (13) et,
- les moyens (11, 12, 22) sont en relation avec le calculateur de trame (12) pour compenser l'erreur de distance (± ΔX) mesurée, pour commander la position préparatoire des valeurs du signal de commande de gravure (GS) des organes de gravure (3) pour une gravure décalée des bandes à graver (A, B).

31. Installation de mesure de position pour une machine à graver servant à graver au moins deux bandes à graver (A, B) juxtaposées dans la direction axiale d'un cylindre d'impression (1) et ayant une largeur de bande (SB) prédéterminée avec chaque fois un organe de gravure associé, sollicité par un signal de commande de gravure (GS),
**caractérisée par**
- une caméra vidéo (28) montée sur un chariot de mesure (27) pour recevoir des images vidéo de la pointe de gravure des organes de gravure (3) ou d'échantillon de cuvettes gravées avec des organes de gravure (3) et constituant les positions réelles effectives des organes de gravure (3) décalés sur des positions de référence grossières prédéterminées (RP),
- le chariot de mesure (27) peut coulisser dans la direction axiale du cylindre de pression (1) et être positionné sur des positions de référence prédéterminées (RP) pour les organes de gravure (3),
- un étage d'exploitation d'image (29) relié à la caméra vidéo (28) pour exploiter les images vidéo prises et déterminer les éventuelles positions réelles des organes de gravure (3) et,
- des moyens (11, 12, 22) reliés à l'étage de traitement d'image (29) pour compenser l'erreur de distance (± ΔX) mesurée par l'installation de positionnement (27, 28, 29), par une gravure décalée des bandes à graver (A, B) sur le cylindre d'impression (1) et par la fourniture décalée de manière correspondante des signaux de gravure (GS) pour les organes de gravure (3).
